# EUROPÄISCHE PATENTSCHRIFT

(11) **EP 3 063 579 B1**
(45) Veröffentlichungstag und Bekanntmachung des Hinweises auf die Patenterteilung: **14.12.2022**
(21) Anmeldenummer: 14816111.0
(22) Anmeldetag: 28.10.2014
(51) Int. Cl.: G02B 7/183, G02B 7/182

(54) **JUSTIERBARE LAGERUNGSANORDNUNG FÜR EIN RELATIV ZU EINER BASIS PRÄZISE ZU POSITIONIERENDES OBJEKT**
ADJUSTABLE MOUNTING ARRANGEMENT FOR AN OBJECT TO BE POSITIONED PRECISELY RELATIVE TO A BASE
ENSEMBLE DE SUPPORTAGE AJUSTABLE POUR UN OBJET À POSITIONNER DE MANIÈRE PRÉCISE PAR RAPPORT À UNE BASE

(30) Priorität: 28.10.2013 DE 102013017874; 28.10.2013 DE 202013011930 U
(43) Veröffentlichungstag der Anmeldung: 07.09.2016
(73) Patentinhaber: MBDA Deutschland GmbH, 86529 Schrobenhausen (DE)
(72) Erfinder: KLAFFERT, Thomas, 85356 Freising (DE)
(74) Vertreter: Isarpatent
(86) Internationale Anmeldenummer: PCT/DE2014/000544
(87) Internationale Veröffentlichungsnummer: WO 2015/062568

(56) Entgegenhaltungen:
- WO-A1-99/38044
- WO-A2-01/65297
- JP-A- 2001 318 301
- US-A1- 2011 310 502

## Beschreibung

Die vorliegende Erfindung betrifft eine justierbare Lagerungsanordnung für ein relativ zu einer Basis präzise zu positionierendes Objekt. Insbesondere betrifft die Erfindung eine justierbare Lagerungsanordnung für einen Sekundärspiegel eines optischen Spiegelteleskops.

Optische Spiegelteleskope können sowohl zum Empfang von optischer Strahlung (zum Beispiel: klassisches Teleskop-Fernrohr) als auch zum Senden von optischer Strahlung (zum Beispiel: Laser-Wirksystem) ausgelegt und eingesetzt werden.

Die meisten Bauarten optischer Spiegelteleskope benötigen eine Struktur, die im Bereich ihrer Apertur eine Aufhängung eines zum Hauptspiegel (oder Primärspiegel) korrespondierenden Fangspiegels (oder Sekundärspiegel) ermöglicht. Beide Spiegel müssen sehr präzise zueinander positioniert sein, so dass einerseits ihre optischen Achsen im Idealfall exakt koaxial sind und andererseits der eingestellte Fokusabstand möglichst unter allen äußeren Bedingungen invariant ist. Veränderungen des Abstandes hätten eine Änderung der Fokussierebene zur Folge, Abweichungen von der Koaxialität würden Abbildungsfehler hervorrufen oder bei einem Sendeteleskop die Spot-Qualität verschlechtern, also beispielsweise den Spot-Radius eines gesendeten Laserstrahls vergrößern.

Große Teleskopschwenkwinkel im Schwerefeld der Erde stellen außerdem große Herausforderungen an die Steifigkeit der Struktur dar, die zugleich hohen thermischen Ansprüchen genügen muss. Abhängig vom Strukturkonzept des Teleskopaufbaues entstehen durch die erforderlichen Verbindungsträger zwischen Haupt- und Fangspiegel (Primär- und Sekundärspiegel) zwangsläufig mehr oder weniger starke Abschattungen. Bei Sendeteleskopen, wie beispielsweise Strahlrichteinheiten für Hochenergie-Laser, verschärft sich dieses Problem in zweierlei Hinsicht:
- Die den Hauptspiegel abschattenden Strukturteile würden einen nicht zu vernachlässigenden Teil der ausgesendeten Energie absorbieren, was kurzzeitig zu thermischen Problemen in der Struktur des Teleskops aufgrund hoher Temperaturgradienten führt. Der reflektierte Anteil führt dabei zudem zu schädlichem Streulicht.
- Sehr hohe Richtgeschwindigkeiten und -beschleunigungen in Verbindung mit großen Richtwinkeln inklusive Überkopf-Schwenkbewegungen, wie beispielsweise bei der Zieleinweisung und -Verfolgung, setzen neben der erforderlichen statischen Steifigkeit zusätzliche strukturdynamische Eigenschaften voraus, die typischerweise im Widerspruch zur Erreichbarkeit minimaler Abschattungen stehen.

### Stand der Technik:

Zur Überwindung dieser Probleme wäre eine direkte Fixierung des Fangspiegels (Sekundärspiegel) innerhalb einer an der Apertur (Eintritts- oder Austrittsapertur) des Teleskops vorgesehenen Glasscheibe denkbar. Da solch eine direkte Fixierung des Fangspiegels (Sekundärspiegels) aufgrund werkstoffbedingter und geometriebedingter Steifigkeitsgrenzen sowie aufgrund begrenzter Möglichkeiten einer räumlichen Feinjustage nur für kleine Teleskopaufbauten mit kleinen Aperturen in Frage käme, umgehen derzeitige bekannte Lösungen dieses Problem in der Regel dadurch, dass einzelne Strahlenbündel zwischen den Strukturteilen verlaufen, die somit Subaperturen bilden. Diese Strahlenbündel können anschließend außerhalb des Teleskopes geometrisch gekoppelt werden, wobei jedoch stets nur ein Teil der Hauptspiegelfläche nutzbar ist. Folglich sind derartige Teleskopstrukturen auch nicht für die Anbindung an einen Coudé-Strahlengang geeignet, da die entstehende Rollbewegung der Strahlenbündel auf den Spiegeln entsprechend der Summe der Richtwinkeländerungen aufgrund der gestellfesten Position dieser Subaperturen nicht möglich ist. Hierzu müsste die gesamte Teleskopstruktur synchron mitrotieren, was zu erheblichen Zusatzproblemen mit Blick auf erreichbare Richtdynamik (wegen der Zusatzträgheit um die Rollachse), Steifigkeiten (Verringerung der Steifigkeit durch zusätzliche Lager) und Genauigkeiten (wegen der zusätzliche Belastung durch Kreiselmomente) führen würde. Darüber hinaus müssten sämtliche Daten- und Versorgungsleitungen über Drehdurchführungen oder sonstige Übertrager angebunden werden. Eine volle Ausnutzung der Hauptspiegelfläche wäre demnach nur durch eine Off-Axis-Anordnung beider Spiegel erreichbar, was zu erheblichem Fertigungsaufwand der Spiegel und den damit verbundenen Machbarkeitsgrenzen führt. Stand der Technik wird z.B in den Druckschriften WO99/38044A1, US 2011/310502A1, WO01/65297A2 oder JP2001318301A beschrieben.

Für eine Realisierung von Off-Axis-Teleskopen gelten alle beschriebenen Forderungen in analoger Weise, wobei darüber hinaus auch der Freiheitsgrad um die Rollachse des relativ zu positionierenden Elementes justierbar sein muss. In diesem Falle resultiert die Forderung nach einer Justagemöglichkeit in allen sechs Freiheiten. Das Problem der Abschattung besteht bei Off-Axis-Optiken dann nicht mehr, wenn alle geforderten Eigenschaften der Justageeinrichtung mit ausreichend kleinen kinematischen Abmessungen realisiert werden können.

Auch in anderen Anwendungsfällen kann es erforderlich sein, zwei Objekte relativ zueinander zu lagern und zueinander exakt, zum Beispiel koaxial, zu positionieren.

Aufgabe der vorliegenden Erfindung ist es daher, eine justierbare Lagerungsanordnung für ein relativ zu einer Basis präzise zu positionierendes Objekt, insbesondere für einen Sekundärspiegel eines optischen Spiegelteleskops, anzugeben, mit der bei geringem Aufwand eine hochgenaue, reproduzierbare, langzeitstabile und robuste Positionierung des Objekts erzielbar ist.

Diese Aufgabe wird durch eine Lagerungsanordnung mit den Merkmalen des Anspruchs 1 gelöst.

Diese erfindungsgemäße justierbare Lagerungsanordnung ist vorgesehen für ein relativ zu einer Basis präzise zu positionierendes Objekt, insbesondere für einen relativ zu einer Basis präzise zu positionierenden Sekundärspiegel eines optischen Spiegelteleskops.

Die erfindungsgemäße justierbare Lagerungsanordnung weist zumindest zwei mit der Basis und dem Objekt verbundene Tragstrukturen auf. Die jeweilige Tragstruktur weist ihrerseits zwei gleichartige Viergelenkträger auf, die nichtparallel zueinander angeordnet sind und die gemeinsam mit einer zwei Verbindungslenker aufweisenden Wiege die jeweilige Tragstruktur bilden. Jeder Viergelenkträger weist zwei nichtparallel zueinander verlaufende Streben auf, die jeweils mit einem ersten Ende in einem objektseitigen Gelenk am Objekt gelenkig gelagert sind. Die erste Strebe und die zweite Strebe sind an ihrem jeweiligen zweiten Ende mit einem äußeren Gelenk versehen. Die äußeren Gelenke beider Viergelenkträger sind über einen zugeordneten Verbindungslenker miteinander verbunden. Der Abstand zwischen den äußeren Gelenken eines jeden Viergelenkträgers ist geringer als der Abstand zwischen den objektseitigen Gelenken. Eine erste und eine zweite Gelenkachse eines jeden Viergelenkträgers liegen in der vom Viergelenkträger bestimmten Ebene oder in einem Winkel zu dieser Ebene. Eine dritte und eine vierte Gelenkachse eines jeden Viergelenkträgers liegen in der vom Viergelenkträger bestimmten Ebene. Die jeweilige Tragstruktur bildete eine die beiden miteinander gekoppelten Viergelenkträger aufweisende räumliche Mehrgelenkstruktur. Der Verbindungslenker ist auf seiner bezüglich der Verbindungsgeraden zwischen den außenseitigen Gelenken zur Innenseite der Viergelenkanordnung versetzten Seite mit einer Lagerfläche eines Stützlagers versehen. Die Tragstruktur ist mittels des Stützlagers relativ zur Basis gelenkig gelagert.

Diese Konstruktion ermöglicht es, einzelne Streben durch Aufbringen einer Kraft auszulenken, beispielsweise unter Einwirkung eines dadurch entstehenden Biegemoments geringfügig zu verbiegen, so dass - im ausgelenkten Zustand der Strebe - der direkte Abstand zwischen den beiden Enden der Strebe (Luftlinie) gegenüber deren Abstand bei gerader Erstreckung der Strebe geringfügig verkürzt ist, woraus eine minimale Verlagerung des Objekts in Richtung auf diese Strebe hin resultiert. Diese sehr feinfühlige Verkürzung des wirksamen Luftlinien-Abstands zwischen den beiden Enden der Strebe wird dadurch erreicht, dass die Auslenkung der Strebe als eine Art Untersetzung für die Bewegung genutzt wird, mit dem die Kraft auf die Strebe aufgebracht wird. Der Bewegungsweg, also die Auslenkung der Strebe, wird also untersetzt in eine Veränderung des Luftlinien-Abstands zwischen den beiden Lagern der Strebe übertragen.

Dadurch, dass die Tragstruktur zumindest vier nichtparallel zueinander verlaufende Streben aufweist, wird das Objekt im Raum optimal positionierbar, da durch die erfindungsgemäße Möglichkeit der Veränderung des Luftlinien-Abstands zwischen den beiden Enden einer jeden Strebe auch die Neigung und die Rotationslage des Objekts einstellbar sind.

Vorzugsweise sind die in der vom Viergelenkträger bestimmten Ebene liegende dritte und vierte Gelenkachse eines jeden Viergelenkträgers die Gelenkachsen der objektseitigen Gelenke.

In einer weiteren bevorzugten Ausbildung der erfindungsgemäßen Lagerungsanordnung weisen die Streben jeweils eine bandartige Gestalt auf, deren flächige Erstreckung in der oder parallel zu der vom Viergelenkträger bestimmten Ebene liegt. Derartige Streben besitzen eine erste Breitenerstreckung, die um ein Vielfaches größer ist als die zweite Breitenerstreckung in der zur ersten Breitenerstreckung orthogonalen Richtung. Dadurch ist die Strebe in Richtung quer zu der Ebene der ersten, längeren Breitenerstreckung leicht biegbar, während sie in der Ebene der ersten, längeren Breitenerstreckung sehr biegesteif ist. Das ermöglicht eine definierte Verbiegung der Strebe in einer vorbestimmten Richtung, nämlich in einer Ebene, die quer zur ersten, längeren Breitenerstreckung liegt. Außerdem ist der sichtbare, lichte Querschnitt der Strebe, in Richtung auf die zweite, kürzere Breitenerstreckung gesehen, sehr gering, so dass die Strebe für in dieser Richtung verlaufende Strahlen nur eine sehr geringe Abschattungsfläche bildet.

Weiter vorzugsweise sind die Gelenke, deren Gelenkachsen in der vom Viergelenkträger bestimmten Ebene liegen, Festkörpergelenke.

In einer bevorzugten Ausführungsform der Erfindung ist jeder Strebe ein antreibbares Aktorelement derart zugeordnet, dass das Aktorelement die Strebe mit einer die Strebe quer zu ihrer Längserstreckung auslenkenden Kraft beaufschlagt.

Vorzugsweise ist das Aktorelement von einem Stellantrieb antreibbar. Auf diese Weise kann der Bewegungsweg des Aktorelements und damit die Veränderung des Luftlinien-Abstands zwischen den beiden Enden der Strebe genau eingestellt werden. Dabei ist es von Vorteil, wenn das Aktorelement ein angetriebenes Element des Stellantriebs ist.

Bevorzugt weist die Lagerungsanordnung zumindest zwei, vorzugsweise zumindest drei, weiter vorzugsweise zumindest vier, mit der Basis und dem Objekt verbundene Tragstrukturen auf. Ist dabei jede der Tragstrukturen mit dem erfindungsgemäßen Verstellmechanismus zur Veränderung des Luftlinien-Abstands zwischen den beiden Enden einer jeden Strebe ausgestattet, so ergibt sich eine Vielzahl von Möglichkeiten, die Position und die Lage des Objekts zu justieren.

Eine besonders wirksame Feinjustierbarkeit wird dadurch erreicht, dass die Streben jeweils einen ersten, basisnahen Endbereich und einen zweiten, objektnahen Endbereich aufweisen und dass das zugeordnete Aktorelement so angeordnet ist, dass es die Strebe unter Antriebseinfluss mit der auf die Strebe ausgeübten Kraft zwischen ihren beiden Gelenken beaufschlagt.

Bevorzugt erfolgt das Aufbringen der Kraft in zumindest einem der gelenknahen Endbereiche der Strebe. Dieses Aufbringen der Kraft nicht im Mittelabschnitt einer Strebe, sondern in deren gelenknahem Endabschnitt, ermöglicht es, den Antrieb für die Verstellung des Aktorelements am Rand der Lagerungsanordnung zu platzieren, wodurch dieser, beispielsweise im Fall des Einsatzes in einem Teleskop, nicht zur Strahlenabschattung beiträgt, da die optischen Aperturen im wesentlichen frei bleiben. Grundsätzlich können die Aktorelemente und deren Antrieb jedoch auch an anderen Orten der jeweiligen Strebe angeordnet sein, da die Kraft prinzipiell an jeder beliebigen Stelle der jeweiligen Strebe aufbringbar ist.

Besonders vorteilhaft ist es auch, wenn das jeder Strebe zugeordnete Aktorelement oder ein weiteres, vorzugsweise ebenfalls von einem Stellantrieb, antreibbares Aktorelement der Strebe derart zugeordnet ist, dass dieses Aktorelement unter Antriebseinfluss die Strebe mit einer ein Biegemoment auf die Strebe ausübenden Kraft beaufschlagt. Dadurch kann nicht nur die bereits beschriebene Auslenkung der Strebe in der sich quer, insbesondere rechtwinklig, zur ersten, längeren Breitenerstreckung erstreckenden Ebene durchgeführt werden, sondern die Strebe kann auch noch in sich tordiert werden, um beispielsweise den lichten Querschnitt der Strebe für in einer vorgegebenen Richtung verlaufende Strahlen zu minimieren. Ebenso kann durch Aufbringen gezielt unterschiedlicher Kräfte auf die jeweilige Strebe einer bezüglich der optischen Achse des Teleskops schräg stehenden Tragstruktur eine Torsion dieser Tragstruktur oder von deren Streben bewirkt werden, die ebenfalls dazu führt, den lichten Querschnitt der Streben für in einer vorgegebenen Richtung verlaufende Strahlen zu minimieren.

Diese Minimierung des lichten Querschnitts einer Tragstruktur durch Torsion der Streben ist besonders dann von Vorteil, wenn die erfindungsgemäße Lagerungsanordnung in einem Teleskop eines Laser-Wirksystems eingesetzt wird, denn dann kann durch eine solche Minimierung des lichten Querschnitts der einzelnen Streben die Strebenfläche minimiert werden, auf die Laserstrahlung auftrifft, wodurch sowohl die Erwärmung der Streben als auch der Strahlungsverlust deutlich reduziert werden. Auch flache Einstrahlwinkel auf von den Oberflächen der einzelnen Streben gebildete Ebenen können so vermieden oder reduziert werden, die weitreichendes und somit besonders schädliches Streulicht zur Folge hätten (im Gegensatz zu stumpfen Kanten oder abgerundeten Flächen, wo das Streulicht innerhalb kürzester Entfernungen divergiert).

Sind die Stellantriebe aller Aktorelemente mit einer gemeinsamen Steuerungs- oder Regelungseinrichtung zur Übertragung von Stellsignalen verbunden, so kann die auf der Vielzahl von Verstellmöglichkeiten der einzelnen Streben beruhende Komplexität der Justierung von Position und Lage des Objekts zuverlässig beherrscht werden.

In einer besonders bevorzugten Ausführungsform ist die Lagerungsanordnung mit mehr als zwei Tragstrukturen versehen, die eine Aufhängung eines zu einem Hauptspiegel korrespondierenden Sekundärspiegels bilden, wobei die mit den Tragstrukturen verbundene Basis von einer Spiegelteleskopstruktur gebildet ist, wobei das Objekt von einer Halterungseinrichtung des Sekundärspiegels gebildet ist und wobei der Sekundärspiegel mittels der Aktorelemente relativ zum Hauptspiegel, zum Beispiel bezüglich dessen Spiegelteleskopachse, koaxial einjustierbar ist. Besonders vorteilhaft ist diese Ausführungsform der Erfindung wenn das Teleskop Teil eines Strahlung aussendenden Laser-Wirksystems ist. Die Erfindung kann aber auch an Strahlung empfangenden Teleskopen eingesetzt werden, wobei dann der Fangspiegel dem oben erwähnten Sekundärspiegel entspricht.

Vorteilhaft ist, wenn die bandartig ausgebildeten Streben der Tragstrukturen so angeordnet sind, dass ihre flächigen Seiten in einer im Wesentlichen parallel zur Spiegelteleskopachse ausgerichteten Ebene verlaufen. Dabei ist die Abschattung durch die Streben für die durch das Teleskop hindurchtretenden Strahlen minimiert.

Vorzugsweise weist die justierbare Lageranordnung zumindest drei Tragstrukturen aufweist und ist das Stützlager ein Kugelgelenklager oder ein Spitzenlager mit dem Freiheitsgrad 3.

In einer bevorzugten Weiterbildung sind alle kinematischen Abmessungen so gewählt, dass auch in beliebig ausgelenktem Zustand der justierbaren Lageranordnung alle Stützlager und alle Momentanpole stets auf einer Ebene liegen, wodurch Verstellbewegungen dieser Lageranordnung kinematisch möglich werden und in beliebiger Reihenfolge nacheinander ausführbar sind.

Die Lagerungsanordnung nach der Erfindung schafft somit ein "durchstrahlungsfähiges Strukturkonzept", das die eingangs geschilderten Abschattungsprobleme derart minimiert, dass:
- entstehendes Streulicht durch Adaptierbarkeit der Struktur stets auf berechenbar unkritische Intensitäten begrenzt werden kann,
- thermische Einflüsse aufgrund von Absorption und von äußeren Umwelteinwirkungen konzeptionell beherrschbar werden sowie
- die strukturdynamischen Eigenschaften für sehr hohe Richtbeschleunigungen innerhalb beliebig großer Teleskopschwenkwinkel realisierbar werden.

Die Erfindung wird nachstehend unter Bezugnahme auf die Zeichnung näher erläutert; in dieser zeigt:
- Fig. 1: eine perspektivische, teilweise geschnittene Ansicht eines mit einer erfindungsgemäßen Lagerungsanordnung für den Sekundärspiegel ausgestattetes Teleskops;
- Fig. 2: eine perspektivische Ansicht einer erfindungsgemäßen Lagerungsanordnung mit drei Tragstrukturen;
- Fig. 3: eine alternative Lagerungsanordnung mit vier Tragstrukturen;
- Fig. 4: eine andere alternative Lagerungsanordnung mit sechs Tragstrukturen;
- Fig. 5: Kraftangriffspunkte der Aktorelemente an den Tragstrukturen am Beispiel Variante aus Fig. 3;
- Fig. 6: eine schematische Darstellung von zwei einander gegenüber gelegenen Tragstrukturen einer erfindungsgemäßen Lagerungsanordnung zur Erläuterung einer seitwärts gerichteten Auslenkung des Objekts;
- Fig. 7: eine schematische Darstellung von zwei einander gegenüber gelegenen Tragstrukturen einer erfindungsgemäßen Lagerungsanordnung zur Erläuterung einer Verkippung des Objekts;
- Fig. 8: eine schematische Darstellung einer Steward-Plattform;
- Fig. 9: eine schematische Darstellung einer kinematischen Kette einer erfindungsgemäßen Lagerungsanordnung mit sechs Tragstrukturen
- Fig. 10: ein vereinfachtes mechanisches Schema kinematischer Ketten zweier einander gegenüber liegender Tragstrukturen im neutralen, nicht ausgelenkten Zustand;
- Fig. 11: eine Darstellung gemäß Fig. 5 mit entsprechend der Fig. 10 hervorgehobenen kinematischen Ketten;
- Fig. 12: das Schema der Fig. 10 in einem Auslenkungszustand
- Fig. 13: das Schema der Fig. 12 mit in der Länge veränderten Streben;
- Fig. 14: eine schematische Seitenansicht zweier einander gegenüber liegender Tragstrukturen in Verbindung mit beiden relativ zueinander zu positionierenden Objekten im einem ausgelenkten Zustand und
- Fig. 15: ein kinematisches Schema der räumlichen Kinematik eines Viergelenkträgers.

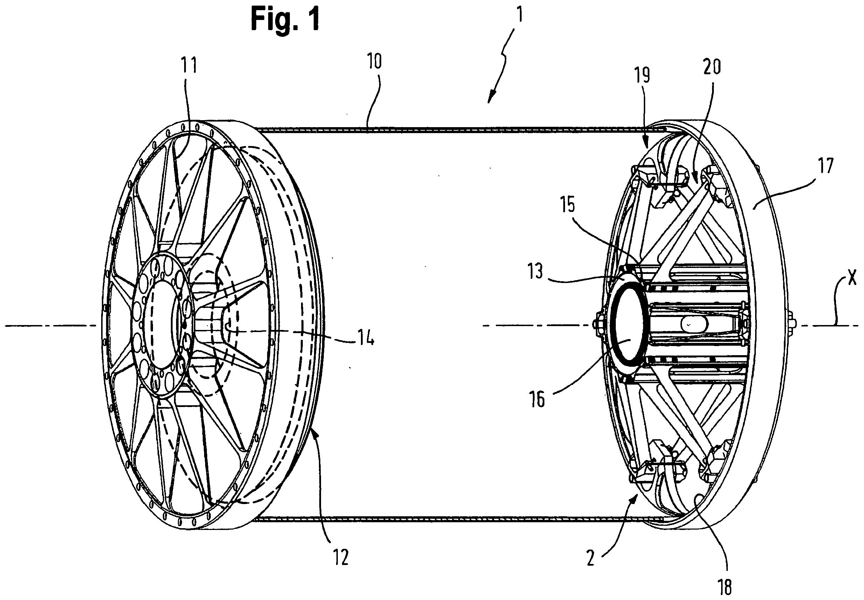

In Fig. 1 ist ein Teleskop 1 in teilweise geschnittener perspektivischer Ansicht gezeigt. Das Teleskop 1 weist ein zylindrisches Gehäuse 10 auf, an dessen einem Ende ein ringförmiger, konkaver Primärspiegel 12, der auch als Hauptspiegel bezeichnet wird, mit einer zentralen, ersten Apertur 14 auf einer gehäusefesten Stützstruktur 11 angeordnet ist. Im Bereich des anderen Endes des Teleskops 1 ist zentral ein auch als Fangspiegel bezeichneter Sekundärspiegel 16 vorgesehen, der mittels einer erfindungsgemäßen Lagerungsanordnung 2 und eines Gestellrings 17 am zylindrischen Gehäuse 10 gelagert ist. Der Primärspiegel 12 und der Sekundärspiegel 16 sind koaxial bezüglich der Längsachse X des zylindrischen Gehäuses 10 ausgerichtet. Eine ringförmige zweite Apertur 18 umgibt den Sekundärspiegel 16 und wird außen vom zylindrischen Gehäuse 10 begrenzt. Das Gehäuse muss nicht zylindrisch sein, es kann, zum Beispiel bei einem Off-Axis-Teleskop, auch eine andere Gestalt aufweisen.

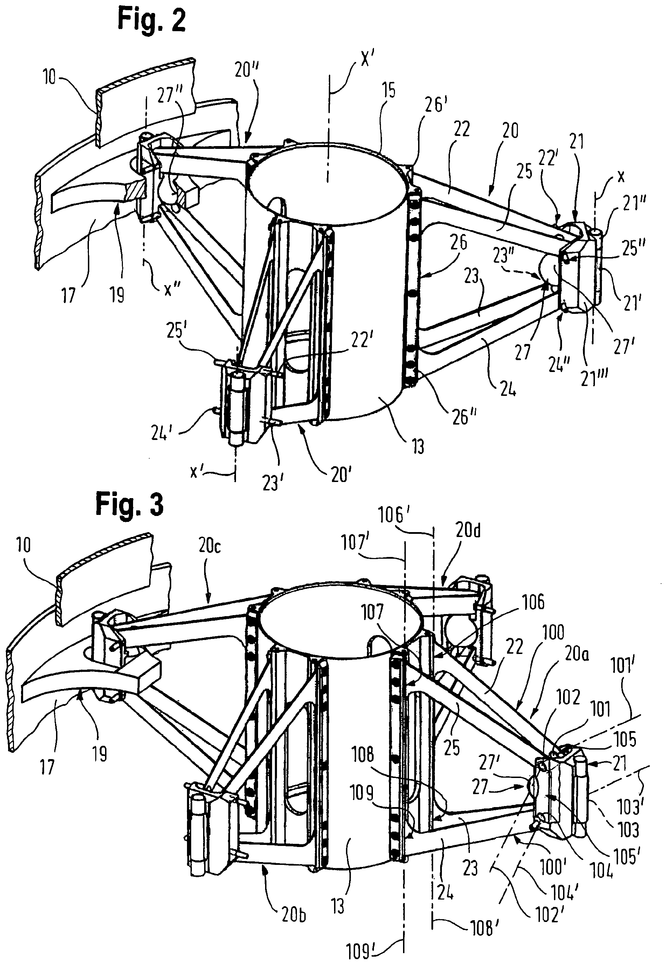

Die Lagerungsanordnung 2 weist mehrere gleich aufgebaute Tragstrukturen 20, in Fig. 1 sechs Tragstrukturen, auf, die sich jeweils zwischen einer Halterungseinrichtung 15 des Sekundärspiegels 16 und einer an dem mit dem Gehäuse 10 verbundenen Gestellring 17 vorgesehenen Lagereinrichtung 19 erstrecken. Die erfindungsgemäße Lagerungsanordnung 2 bildet eine bezüglich des Primärspiegels 12 am Gehäuse 10, also gestellfest, gelagerte mehrgliedrige kinematische Struktur. Der Aufbau der Lagerungsanordnung 2 und insbesondere der Tragstrukturen 20 wird unter Bezugnahme auf Fig. 2 anhand eines vereinfachten Beispiels mit nur drei minimal erforderlichen Tragstrukturen 20, 20', 20" beschrieben.

Die drei Tragstrukturen 20, 20', 20" sind identisch aufgebaut, so dass nachstehend nur die Tragstruktur 20 im Detail beschrieben wird; diese Beschreibung trifft sinngemäß auch für alle andere Tragstrukturen zu. Ein inneres zylindrisches Halterungselement 13 bildet an seinem oberen Stirnende die Halterungseinrichtung 15 für den Sekundärspiegel 16, die im gezeigten Beispiel nicht näher dargestellt ist. Auch das Gehäuse 10 des Teleskops 1 und der Gestellring 17 mit der Lagereinrichtung 19 sind in Fig. 2 aus Gründen der Übersichtlichkeit nur abschnittsweise im Bereich der Tragstruktur 20" dargestellt.

Das Gehäuse 10 bildet eine Basis für die Tragstrukturen 20, 20', 20" und das von den Tragstrukturen 20, 20', 20" gehalterte Objekt ist im gezeigten Beispiel der an einer Halterungseinrichtung 15 angebrachte Sekundärspiegel 16. Die Tragstrukturen 20, 20', 20" sind jeweils mittels einer ein Gelenk aufweisenden Wiege 21 an der jeweils zugeordneten Lagereinrichtung 19 des mit dem Gehäuse 10 verbundenen Gestellrings 17 schwenkbar gelagert. Im Falle rechtwinklig zueinander angeordneter Tragstrukturen kann das Gelenk der Wiege 21 zwar grundsätzlich als Schneidengelenk mit einem Freiheitsgrad ausgebildet sein, sofern auf die Möglichkeit einer Streulichtminimierung verzichtet werden kann.

Zur Vermeidung dieser Einschränkungen ist es, wie auch in den Figuren gezeigt, vorzugsweise als Kugelgelenk 27 mit drei Freiheitsgraden ausgebildet.

An der jeweiligen Wiege 21 sind vier Streben 22, 23, 24, 25 angebracht, die nicht parallel zueinander radial nach innen zu einer am zylindrischen Halterungselement 13 angebrachten Verankerungsstruktur 26 verlaufen. Die Streben 22, 23, 24, 25 sind beispielsweise aus einem X-förmigen Blechteil gebildet, das mit seinem Mittelabschnitt 21' um einen ein Wiegenlager bildenden Lagerstift 21" der Wiege 21 herumgebogen und durch eine Öffnung im Wiegenkörper 21‴ der Wiege 21 hindurchgeführt ist. Der Lagerstift 21" stützt sich an der radial äußeren Seite des Wiegenkörpers 21‴ ab. Jeder Lagerstift besitzt eine Längsachse x, x', x", die im nicht ausgelenkten Zustand der Tragstrukturen parallel zur Längsachse X des zylindrischen Gehäuses 10 verläuft. An der radial inneren Seite ist jede Wiege 21 mit einer kugelförmigen oder kugelsegmentförmigen konvexen Lagerfläche 27' des Kugelgelenks 27 versehen. Als Gegenlagerfläche ist eine kugelförmige oder kugelsegmentförmige konkave Lagerfläche 27" an der Lagereinrichtung 19 vorgesehen, gegen die sich die konvexe Lagerfläche 27' abstützt. Im Falle gleicher Kugelradien liegt hier eine kugelgelenkige Lagerung vor. Alternativ wäre auch eine Spitzenlagerung möglich, jedoch mit reduzierten Tragfähigkeits- und Steifigkeitseigenschaften.

Die Verankerungsstruktur 26 weist zwei in Umfangsrichtung des zylindrischen Halterungselements 13 voneinander beabstandete und parallel zur Längsachse X' des zylindrischen Halterungselements 13 verlaufende Strukturbalken 26', 26" auf. Die erste Strebe 22 und die zweite Strebe 23 sind am ersten Strukturbalken 26' in Richtung der Achse X' voneinander beabstandet mit dem ersten Strukturbalken 26' verbunden. Die dritte Strebe 24 und die vierte Strebe 25 sind, ebenfalls in Richtung der Längsachse X' des zylindrischen Halterungselements 13 voneinander beabstandet mit dem zweiten Strukturbalken 26" verbunden. Auf diese Weise bilden die vier Streben 22, 23, 24, 25, die strahlenförmig in unterschiedliche Richtungen von der Wiege 21 ausgehen, ein räumliches Strukturgebilde, das zusammen mit den am zylindrischen Halterungselement 13 angebrachten Strukturbalken 26', 26" und der Wiege 21 die Tragstruktur 20 definiert. Dabei sind die Streben 22, 23, 24, 25 an der Verankerungsstruktur 26 geklemmt gehaltert, wozu die Strukturbalken 26', 26" Klemmeinrichtungen aufweisen. Die Strukturbalken mit den Klemmeinrichtungen bildet die Verankerungsstruktur 26.

Wie in Fig. 2 zu erkennen ist, sind die einzelnen Streben 22, 23, 24, 25 von bandartiger Gestalt, das heißt, dass ihre Breitenerstreckung in einer Ebene parallel zur Längsachse X' des zylindrischen Halterungselements 13 größer ist als in einer Richtung, die parallel zu einer Tangente an das zylindrische Halterungselement 13 im Bereich des zugeordneten Strukturbalkens 26', 26" verläuft.

Jeder der Streben 22, 23, 24, 25 ist ein Aktorelement 22', 23', 24', 25' zugeordnet, die in Fig. 2 aus Gründen der Übersichtlichkeit an der Tragstruktur 20' gezeigt sind. Jedes der Aktorelemente 22', 23', 24', 25' ist von einem jeweils zugeordneten Stellantrieb 22", 23", 24", 25" derart antreibbar, dass das Aktorelement 22', 23', 24', 25' eine Kraft auf die seitliche Fläche einer zugeordneten Strebe 22, 23, 24, 25 ausüben kann. Durch Ausüben einer solchen Kraft auf die Strebe kann diese Strebe seitlich ausgelenkt werden, beispielsweise mit einem Biegemoment beaufschlagt werden, und sich so aus der parallel zur Längsachse X' des zylindrischen Halterungselements 13 verlaufenden Ebene, in der sich die Strebe in ihrer Strecklage erstreckt, ausbiegen. Der Luftlinien-Abstand zwischen dem an der Wiege 21 angebrachten Ende der Strebe und dem am zugeordneten Strukturbalken 26', 26" angebrachten Ende der Strebe verkürzt sich dadurch, wodurch der entsprechende Anlenkungspunkt der Strebe am zugeordneten Strukturbalken und damit am zylindrischen Halterungselement 13 geringfügig radial nach außen gezogen wird.

Die einzelnen Tragstrukturen 20, 20', 20" weisen somit mehrere sehr dünne Strebenbänder auf, die innerhalb von mindestens drei durch die Tragstrukturen gebildeten Führungsketten so angeordnet sind, dass ihre kinematischen Abmessungen mittels einer Anzahl von mehr als sechs Stellantrieben einerseits eine Justage seiner abtriebsseitigen Plattform (Halterungseinrichtung 15) mit angebundenem Sekundärspiegel 16 in allen sechs Freiheitsgraden ermöglicht (entsprechend einer Parallelkinematik mit dem Freiheitsgrad F = 6, "Hexapod") und andererseits, dass in Kombination mit der Anzahl von Stellantrieben, die über den sechsten Stellantrieb hinaus geht, ebenfalls Vorspannung und Torsion jeder einzelnen Führungskette aufgrund implementierter sogenannter "identischer Freiheiten" einstellbar werden. Hierbei ist jeder Strebe ein Stellantrieb zugeordnet, der sich gemeinsam mit den übrigen Stellantrieben der jeweiligen Führungskette (Tragstruktur) mittels der kugelig gelagerten Wiege 21 an einer am rotationssymmetrischen gehäusefesten Gestellring 17 vorgesehenen Lagereinrichtung 19 abstützt. Daraus resultiert bereits eine entscheidende Voraussetzung für eine steuerbare Streulichtminimierung. Unter dem Begriff "identische Freiheit" ist eine einflusslose Freiheit eines kinematischen Elements oder einer kinematischen Führungskette zu verstehen, die keinen kinematischen Einfluss auf die Übertragungsfunktion einer übergeordneten Getriebeanordnung hat.

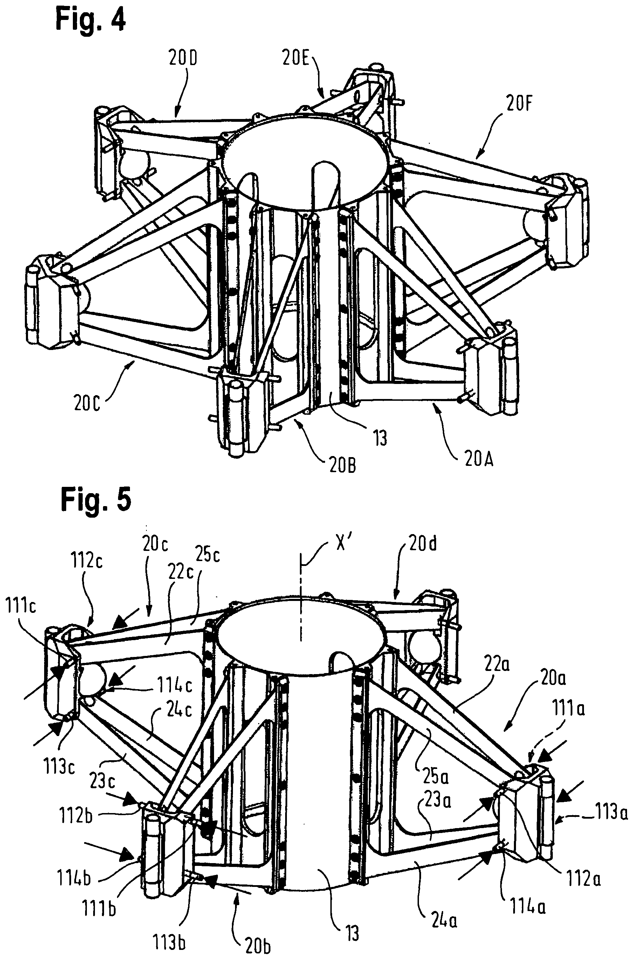

Fig. 3 zeigt eine erfindungsgemäße Lagerungsanordnung mit vier Tragstrukturen 20a, 20b, 20c, 20d und Fig. 4 eine mit sechs Tragstrukturen 20A, 20B, 20C, 20D, 20E, 20F, die jeweils in Umfangsrichtung in gleichbleibenden Abständen zueinander am zylindrischen Halterungselement 13 angebracht und an dem mit dem Gehäuse 10 verbundenen, gehäusefesten Gestellring 17 gelagert sind. Im Aufbau entsprechen die dort gezeigten Tragstrukturen denen aus Fig. 2.

Aus Gründen der Übersichtlichkeit ist der Aufbau einer Tragstruktur nur in Fig. 3 bei der Tragstruktur 20a eingezeichnet; die übrigen Tragstrukturen 20; 20b, 20c, 20d; 20A, 20B, 20C, 20D, 20E, 20F sind jedoch in der gleichen Weise gestaltet. Die Tragstruktur umfasst zwei gleichartige Viergelenkträger 100, 100', die nichtparallel zueinander angeordnet sind und die gemeinsam mit der zwei Verbindungslenker 105, 105' aufweisenden Wiege 21 die Tragstruktur 20a bilden.

Jeder der Viergelenkträger 100, 100' weist eine erste Strebe 22, 25 und eine zweite Strebe 23, 24 auf die jeweils an ihrem objektseitigen Ende am zugeordneten Strukturbalken 26', 26" des zylindrischen Halterungselements 13 eingespannt sind. Diese Einspannstellen bilden jeweils ein als Festkörpergelenk ausgestaltetes objektseitiges oder inneres Gelenk 106, 108, 107, 109 aus, dessen jeweilige Gelenkachse 106', 108', 107', 109' parallel zur Längsachse X' des zylindrischen Halterungselements 13 verläuft und in der von den bandartigen Streben 22, 25 beziehungsweise 23, 24 aufgespannten Ebene des jeweiligen Viergelenkträgers 100, 100' liegt.

An ihrem anderen Ende, dem basisseitigen Ende, sind die Streben 22, 25, 23, 24 eines jeden Viergelenkträgers 100, 100' mittels jeweils eines basisseitigen oder äußeren Gelenks 101, 103 beziehungsweise 102, 104 an einem dem entsprechenden Viergelenkträger 100. 100' zugeordneten Verbindungslenker 105, 105' der Wiege 21 gelenkig gelagert. Die Gelenkachsen 101', 103', 102', 104' dieser basisseitigen oder äußeren Gelenke 101, 103, 102, 104 erstrecken sich in einem Winkel zu der Ebene, die von den dem jeweiligen Gelenk zugeordneten bandartigen Streben 22, 25 beziehungsweise 23, 24 des jeweiligen Viergelenkträgers 100, 100' aufgespannt wird.

Der gemäß der Erfindung gebildete Verstellmechanismus für die Lage und Position der Längsachse X' des Halterungselements 13 und folglich für die Lage und Position der optischen Achse des mit dem Halterungselement 13 mittels der Halterungseinrichtung 15 verbundenen Sekundärspiegels 16 wird nachstehend im Detail erläutert.

Das im Weiteren unter Bezugnahme auf Fig. 5 bis Fig. 7 beschriebene Justagekonzept beruht auf der oben beschriebenen seitlichen Biegeauslenkung einzelner bandartiger Streben mittels der von einem zugeordneten Stellantrieb bewegbar angetriebenen Aktorelemente, ausgehend von einer vorgespannten Ausgangslage der jeweils zugeordneten Strebe nahe ihrer Strecklage (Singularität erster Ordnung). Aufgrund der dadurch erzielbaren anfangs extrem hohen Stellübersetzungen wird eine sehr hohe Feinfühligkeit der Justage erreicht, die besonders fehlertolerant bezüglich Regelabweichungen der Stellantriebe ist und die zugleich geringe Rückstellkräfte auf die Stellantriebe bewirkt.

Die einzelnen Streben können zum Beispiel aus sehr dünnen, längssteifen Blechen mit hinreichender Biegeelastizität in Querrichtung gebildet werden. Alternativ kommen auch Anordnungen einzelner Fäden, Drähte, Gewebe oder auch Verbundwerkstoffe als Streben in Frage, die in ihrer Ausgangsstellung jeweils eine dünne, ebene Struktur bilden. Dabei können Teile der Tragstrukturen, aus denen die beschriebene kinematische Struktur besteht, aus zu Integralstrukturen zusammengefassten Strebenelementen bestehen, wobei die Integralstrukturen die einzelnen Streben bilden.

Durch einen nachfolgend anhand der in Fig. 3 gezeigten Ausführungsform unter Bezugnahme auf Fig. 5 beschriebenen, realisierten kinematischen Zwanglauf der Führungsketten bildenden Tragstrukturen 20a, 20b, 20c, 20d zueinander wird eine Hochkant-Anordnung der bandartigen Streben in Richtung der Längsachse X ermöglicht, die durch das Flächenträgheitsmoment zugleich die Steifigkeit der Sekundärspiegelanbindung bezüglich der Nick- und der Gierachse deutlich vergrößert. Die in Fig. 5 nicht gezeigte Nickachse und die dort ebenfalls nicht gezeigte Gierachse sind orthogonal zueinander ausgerichtet und verlaufen zudem jeweils orthogonal zur Längsachse X des Teleskops, welche eine Rollachse bildet. Die Stellantriebe für die auf die jeweiligen Streben eine Biegekraft ausübenden Aktorelemente, auf die in der nachstehenden Funktionsbeschreibung Bezug genommen wird, sind in Fig. 5 bezeichnet.

Die durch die Stellantriebe verursachten Auslenkungen an drei Biegestellen je Strebe erfolgen stets in deren Querrichtung. Erfolgt nämlich eine Biegung der Strebe am Angriffspunkt des Aktors, muss die dadurch vorgespannte Strebe ebenfalls zwei Biegestellen an Ihren Einspannungen aufweisen; das entspricht der Aufspannung eines Dreiecks bei einer ebenen Strebe einer noch nicht ausgelenkten Tragstruktur. In Fig. 2 lägen diese weiteren Biegestellen an der Verankerungsstruktur 26 sowie an der Umschlingung des Lagerstifts 21' durch den Mittelabschnitt 21' des X-förmigen Strebenblechs.

Die Biegestellen stellen somit eindimensionale Festkörperdrehgelenke dar, wobei die Drehachsen dieser Festkörperdrehgelenke an den Angriffspunkten der Stellantriebe geometrisch bedingt jedoch per Zwanglauf räumlich wandern. Die in diesem Ausführungsbeispiel dargestellten Stellantriebe sind deshalb kugelgelenkig an die jeweils zugeordnete Strebe angebunden. Anordnungen von Drehschubgelenken sind an diesen Stellen ebenfalls möglich.

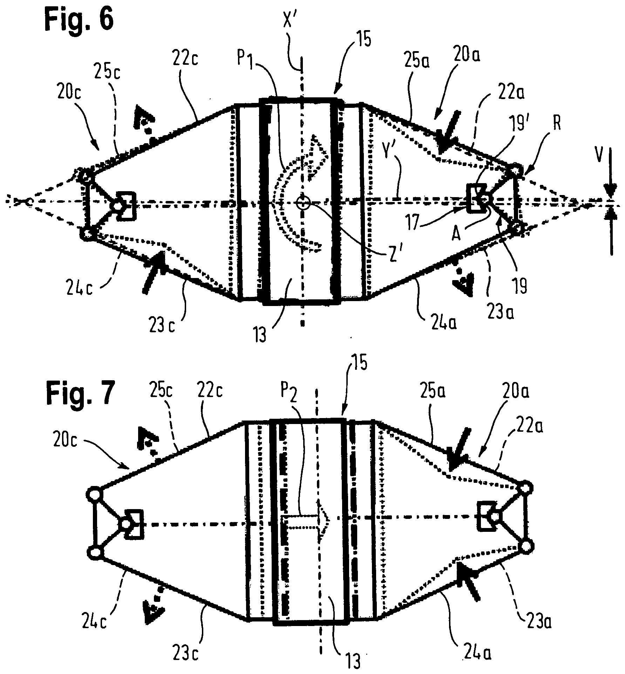

Die Justage von Nick- und Gierwinkel der Halterungseinrichtung 15 für den Sekundärspiegel 16 (Pfeil P₁ in Fig. 6) wird nachfolgend am Beispiel einer spinnenartigen Anordnung mit vier Führungsketten bildenden Tragstrukturen gemäß Fig. 5 anhand der schematischen Darstellung in Fig. 6 aufgezeigt. Nick- und Gierwinkel sind die Winkel einer Schwenkbewegung des Teleskops um die Nickachse Y' beziehungsweise um die Gierachse Z'.

Werden die Stellantriebe 111a und 112a der beiden Streben 22a und 25a der Tragstruktur 20a und die Stellantriebe 113c und 114c der beiden Streben 23c und 24c der Tragstruktur 20c in Pfeilrichtung zugestellt, üben also eine Kraft auf die jeweilige Strebe aus, und werden zugleich die Stellelemente der spiegelsymmetrisch angeordneten Stellantriebe 113a und 114a der beiden Streben 23a und 24a der Tragstruktur 20a sowie 111c und 112c der beiden Streben 22c und 25c der Tragstruktur 20c gegen die Pfeilrichtung entspannt, resultiert eine Veränderung der kinematischen Längen der korrespondierenden Streben, so wie dies die vereinfachte Abwicklung in die Ebene gemäß Fig. 6 verdeutlicht.

Die Verformung der realen Geometrie der Streben in Querrichtung gemäß Fig. 5 setzt hingegen die beiden folgenden kinematischen Zwangläufe voraus:
1. eine räumliche Verlagerung des Drehpols an der Angriffsstelle, das heißt die bandartigen Streben werden beidseitig der Angriffsstelle des Aktorelements der Stellantriebe tordiert, weshalb die Stellantriebe oder die Aktorelemente auch kugelgelenkig an die jeweilige Strebe angebunden sein müssen, wenn sie die Strebe nicht nur unter Berührung beaufschlagen, sondern mit dieser gekoppelt sind;
2. einen kinematischen Ausgleich der Gangpolverschiebung V gemäß Fig. 6 bezüglich der Auflagepunkte A, was sich ausgehend vom bekannten Prinzip eines abgewandelten Roberts-Lenkers erfindungsgemäß realisieren lässt, indem sein Funktionsprinzip in ein räumliches Getriebe überführt wird, wobei der Abtriebspunkt des Roberts-Lenkers R hierbei gestellfest kugelig gelagert wird und darüber hinaus seine kinematischen Abmessungen derart zu bemessen sind, dass inklusive justagebedingter Veränderung der Strebenlängen seine Auslenkung am Punkt A in (in Fig. 6) vertikaler Richtung genau dem Betrag der Gangpolverschiebung V entspricht. Dies entspricht der Zwanglaufbedingung gemäß der in jeder Stellung zweier gegenüberliegender Kinematiken die Auflagepunkte A, A' und die Momentanpole B, B' stets auf einer Geraden liegen, das heißt bei räumlicher Anordnung mehrerer Tragstrukturen stets auf einer Ebene liegen.

Analog zum Dreieck des ebenen Roberts-Lenkers R resultiert beim räumlichen Getriebe eine Pyramide, deren Spitze kugelig an der Lagereinrichtung 19 am Gestellring 17 gelagert ist, und an deren weiteren (Basis-)Ecken jeweils die Stellantriebe 111 bis 114 kugelgelenkig angreifen. Sind die zuvor genannten Zwangsbedingungen erfüllt, so korrespondieren alle jeweils gegenüberliegenden, Führungsketten bildenden Tragstrukturen 20a, 20c beziehungsweise 20b, 20d der spinnenartigen Lagerungsanordnung zwangläufig um denselben Justage-Drehpol der Halterungseinrichtung 15 für den Sekundärspiegel 16 aufgrund ihrer rotationssymmetrischen Anordnung. Die Wiegen 21 neigen sich hierbei gegensinnig zum Verstellwinkel der Halterungseinrichtung 15 für den Sekundärspiegel 16.

Anhand der Lagerungsanordnung mit vier Tragstrukturen wird deutlich, dass die beiden zur Justage-Winkelverstellung orthogonal zueinander angeordneten Tragstrukturen eine Drehbewegung um den Auflagepunkt 19' der jeweiligen Wiege 21 um ihre Symmetrieachse durchführen müssen, um eine Torsion dieser Streben zu vermeiden. Aus dem beschriebenen Freiheitsgrad jeder einzelnen Tragstruktur mit kugelgelenkiger Anbindung an den Gestellring 17 resultiert auch die Möglichkeit, Lagerungsanordnungen mit einer theoretisch beliebigen Anzahl von Tragstrukturen vorzusehen, wie beispielsweise sechs Tragstrukturen gemäß Fig. 4, wobei sich gleichzeitige Einstellbewegungen um die Nickachse und um die Gierachse beliebig überlagern lassen. In Analogie werden auch Toleranzen und eventuell resultierende Asymmetrien nach abgeschlossener Justage der Lagerungsanordnung durch die sich individuell einstellenden Nick- und Gierbewegungen der Wiegen selbsttätig ausgeglichen.

Die horizontale und vertikale Justage der Halterungseinrichtung 15 für den Sekundärspiegel 16 erfolgt am Beispiel der in Fig. 5 gezeigten Lagerungsanordnung mit vier Tragstrukturen gemäß der schematischen Darstellung in Fig. 7 in ähnlicher Weise.

Für eine seitliche Parallelverschiebung der Halterungseinrichtung 15 für den Sekundärspiegel 16 nach rechts (Pfeil P₂) werden die vier Stellantriebe 111a bis 114a der Streben 22a, 23a, 24a, 25a der in Fig. 7 rechten Tragstruktur 20a in Pfeilrichtung synchron zugestellt, wobei eine auf die jeweilige Strebe einwirkende Auslenkung (Biegekraft) erhöht wird, während die Stellantriebe 111c bis 114c der Streben 22c, 23c, 24c, 25c der gegenüberliegenden, korrespondierenden Tragstruktur 20c gegensinnig zeitsynchron entspannt werden.

An den orthogonal dazu liegenden Tragstrukturen 20b, 20d wird diese Bewegung durch entsprechende Rollbewegungen der zugehörigen Wiegen (um eine Achse des Kugelgelenks) selbsttätig ausgeglichen. Hierbei wird deutlich, dass die Rollbewegung jeder Wiege durch seitlichen Offset der zugehörigen Stellantriebe (Zustellen von 111b und 113b sowie Entspannen von 112b und 114b sowie spiegelsymmetrisch an der gegenüberliegenden Tragstruktur) beliebig verändert und somit auch wieder ausgeglichen werden könnte. Im Umkehrschluss folgt daraus, dass bei rundum gleichsinnig orientierter, seitlicher Offset-Verstellung der Stellantriebe an den Wiegen aller Tragstrukturen (beliebiger Anzahl) eine Justage der Halterungseinrichtung 15 für den Sekundärspiegel 16 um ihre Rollachse ermöglicht wird. Dieser Freiheitsgrad ist für die Feinjustage von Off-Axis-Optiken relevant.

Die Justage des Fokusabstandes durch koaxiale Verschiebung der Halterungseinrichtung 15 für den Sekundärspiegel 16 bezüglich des Primärspiegels 12 entlang der Längsachse X (in Fig. 5 nach oben) wird durch Zustellung (Biegekrafterhöhung) aller Stellantriebe an der oberen Seite der spinnenartigen Lagerungsanordnung, nämlich an den Stellantrieben 111 und 112, und durch entsprechende Entspannung (Biegekraftreduzierung) aller übrigen Stellantriebe 113 und 114 an der unteren Seite der Lagerungsanordnung ermöglicht. Eine entsprechend umgekehrte Betätigung der Stellantriebe führt zu einer koaxialen Verschiebung der Halterungseinrichtung 15 für den Sekundärspiegel 16 in entgegengesetzter Richtung.

Das beschriebene spinnenartige Lagerungskonzept ermöglicht eine feinfühlige, spiel- und hysteresefreie und zugleich sehr robuste und langzeitstabile Feinjustierbarkeit der Halterungseinrichtung 15 für den Sekundärspiegel 16 hinsichtlich aller sechs Freiheitsgrade, die auch jederzeit überprüft und nachkalibriert werden kann.

Eine Streulichtminimierung setzt zusätzlich voraus, dass darüber hinaus auch alle bandartigen Streben über ihre gesamte Länge parallel zu den ein- oder austretenden Lichtbündeln des Teleskops justierbar sind, was im Unterschied zur reinen Parallelkinematik eines Hexapoden antriebsseitig eine hinreichend vergrößerte Anzahl linear abhängiger Stellglieder bedingt (=> hybride Parallelkinematik). Im Falle teleskopintern steuerbarer Ablenkbarkeit der austretenden Lichtbündel, wie beispielsweise durch einen bezüglich seiner Halterungseinrichtung 15 kardanisch gelagerten Sekundärspiegel 16 oder durch andere vorgeschaltete optische Komponenten, muss die Strebenausrichtung winkel- und phasensynchron mit der Bandbreite der geregelten Strahlablenkung erfolgen können, ohne dass sich dabei der beabsichtigte Justagezustand der Lagerungsanordnung ändert.

Erfindungsgemäß lässt sich eine optimierte Strebenausrichtung zur Realisierung minimaler Abschattungsflächen wie folgt realisieren:
Nach korrekter Einstellung der Halterungseinrichtung 15 für den Sekundärspiegel 16 koaxial zur optischen Achse des Primärspiegels 12 sind die radial inneren Anbindungen der Streben am zylindrischen Halterungselement 13 bereits parallel zu der mit der Längsachse übereinstimmenden optischen Achse des Primärspiegels 12 ausgerichtet. Zur Streulichtminimierung am Teleskop mit feststehendem Sekundärspiegel 16 müssen die radial äußeren, am Gestellring 17 gelagerten Anbindungen der zusammengefassten Streben über die Wiegen 21 mittels der vier jeweils zugehörigen Stellantriebe exakt auf den einjustierten Winkel der radial inneren Anbindungen der Streben tordiert werden. Dies wird erfindungsgemäß durch gezielte Steuerung der eingangs erwähnten "identischen Freiheiten" mittels derselben Stellantriebe erreicht, die auch zur Realisierung der Justagefreiheitsgrade benötigt werden. Für die in Fig. 5 rechte Tragstruktur 20a erfolgt dies zum Beispiel durch gleichsinniges Zustellen der Stellantriebe 111a und 114a sowie durch Entspannen der Stellantriebe 112a und 113a oder umgekehrt, ebenso wie für alle weiteren Tragstrukturen synchron in Analogie. Maßgeblich hierfür ist die jeweilige Raumwinkelstellung der Streben am Angriffspunkt der kugelgelenkig angreifenden Aktorelemente, wie es bereits anhand der Nickwinkeleinstellung zuvor beschrieben worden ist. Die hierdurch wieder herstellbare Ebenheit der bandartigen Streben realisiert eine minimale Projektionsfläche zu den Lichtbündelachsen über die gesamte Strebenlänge unabhängig vom jeweiligen Justagezustand, wodurch kritische Reflektionen an den Längsseiten der Streben vollständig vermieden werden können.

In Analogie sind die identischen Freiheiten erfindungsgemäß auch zur Realisierbarkeit einer beliebigen Reihenfolge der Justageschritte nutzbar, so dass im Unterschied zu reinen Parallelkinematiken keine gleichzeitig zeit- und wegsynchronisierte Betätigung aller Stellantriebe entsprechend der Übersetzungs-Transformationsmatrix erfolgen muss. Auf diese Weise wird auch eine handbetätigte Justage ermöglicht, indem insbesondere die jeweils differentiell zu bewegenden Stellelemente gegenüberliegender Tragstrukturen auch nacheinander verstellt werden können, da alle kinematischen Abweichungen bis zum Abschluss eines Justageschrittes bezüglich eines Stellfreiheitsgrades mittels der identischen Freiheiten elastisch aufgefangen werden. Nach korrekter Ausführung aller differentiellen Bewegungen der Stellelemente liegt die Tragstruktur somit wieder in derselben Ebene wie vor diesem Justageschritt.

Mit zunehmender Vergrößerung aller erforderlichen Justierwege hierzu würde die Strebenvorspannung geringfügig ansteigen, wobei auch diese durch synchrone Zustellung oder Entspannung aller Stellantriebe jeweils gegenüberliegender Tragstrukturen anpassbar ist beziehungsweise durch Kollektivverstellung aller Stellantriebe der Vorspannungszustand der gesamten Lagerungsanordnung steuerbar ist. Bei Teleskopen mit interner Strahlablenkung können die Torsionswinkel der Streben mit gleicher Methode derart überkompensiert werden, dass die Streben im Bereich maximaler Intensität der teleskopintern abgelenkten Strahlenbündel genau parallel zu diesen verlaufen, und dass zugleich die Abweichungen dort am größten sind, wo die Strahlungsintensität am geringsten ist. Bei mittiger Durchstrahlung der Streben entspräche der einzustellende Torsionswinkel an der Wiege beispielsweise genau dem doppelten Neigungswinkel des Lichtbündels quer zu dieser Strebe. Aufgrund der relativ geringen Massenträgheit der Wiegen 21 lassen sich durch die Stellantriebe in Verbindung mit optimal angepasster Übersetzung bei ausreichender Strebenvorspannung große Bandbreiten der Verstellung ermöglichen.

Eine radiale Mindestvorspannung der Streben ist für die Justierbarkeit und für den stabilen Einsatz der gezeigten Lagerungsanordnung unerlässlich, wobei sich eine weitere Erhöhung dieser Vorspannung innerhalb der Belastungsgrenzen der Streben sowohl bezüglich der Robustheit gegenüber äußeren Einflüssen (thermischer Ausdehnung, Vibration, etc.) als auch hinsichtlich erreichbarer Bandbreite mit den Stellantrieben sowie äußerer Anregungen durch vorgelagerte Stellsysteme (Querbeschleunigung bei Teleskopschwenk, etc.) zunehmend positiv auswirkt. Der nach allen Einstellwegen jeweils erreichte Vorspannungszustand der Lagerungsanordnung ist vorteilhaft durch Klangspektrumsanalyse der einzeln angeregten Streben quantitativ nachweisbar.

Ein möglicher Teleskopaufbau, der die zuvor beschriebene hybride Parallelkinematik der Lagerungsanordnung mit dem Freiheitsgrad F = 6 als "Spinne" mit redundanten Stellantrieben zur Realisierung von sechs steuerbaren identischen Freiheitsgraden beinhaltet, lässt sich auch anhand der dem Fachmann bekannten Grübler'schen Formel zur Bestimmung des Laufgrades räumlicher Mechanismen analysieren.

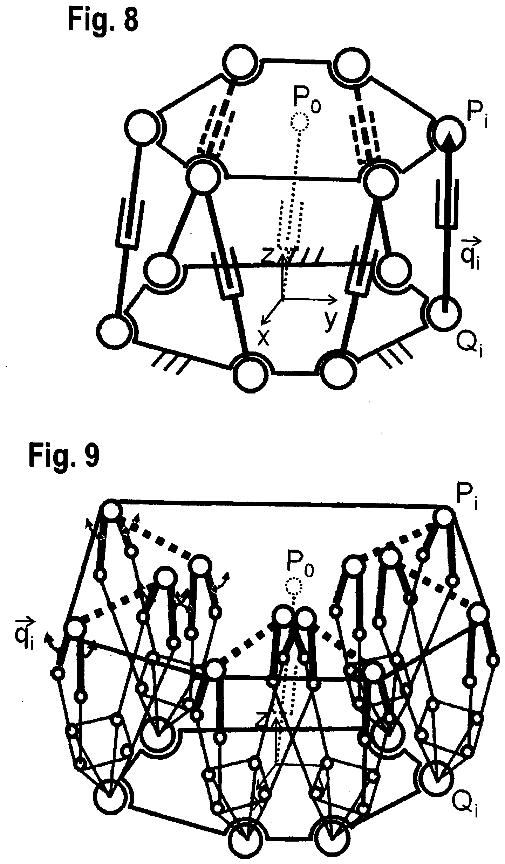

Zur besseren Anschaulichkeit kann dies vergleichsweise zu einer in Fig. 8 schematisch gezeigten sogenannten Steward-Plattform abgeleitet werden, die speziell hierfür mit zwölf Kugelgelenken angenommen wird, so dass sechs "identische" bzw. "nichteinschränkende" Freiheiten (Rotationsmöglichkeit der Stellantriebe um ihre Längsachsen) entstehen. Eine Aufstellung der kinematischen Kette gemäß Fig. 9 zur erfindungsgemäßen Realisierbarkeit aller zuvor beschriebenen Justagemöglichkeiten einer Spinne mit sechs Führungsketten (Tragstrukturen), sechs Kugelgelenken, sechzig eindimensionalen Festkörper-Drehgelenken (Strebenbiegung), sechsundfünfzig Gliedern und sechs "identischen Freiheiten" an den Wiegen kommt hiernach zum gleichen Ergebnis, wobei die "identischen Freiheiten" durch die redundante Anzahl von Stellantrieben je Tragstruktur gezielt steuerbar sind.

Die Erfindung betrifft somit eine als Teleskopspinne gestaltete Lagerungsanordnung, basierend auf einer hybriden Parallelkinematik, zur feinfühligen, spiel- und hysteresefreien Feinjustierbarkeit der Sekundärspiegelaufnahmen in optischen Spiegelteleskopen in allen sechs Freiheiten, deren an der Fangspiegelaufnahme fixierte Führungsketten (Tragstrukturen) jeweils vier, zu ihrer Dicke relativ breite bandartige Streben beinhalten, denen jeweils genau ein Stellantrieb zugeordnet ist, der sich gemeinsam mit den übrigen Streben derselben Führungskette gegenüber der am Lagerelement des Teleskop-Gestellrings kugelig gelagerten Wiege abstützt.

Das Prinzip dieser Teleskopspinne eignet sich ebenso zur Justage von Off-Axis-Optiken, wobei auch beliebige Anordnungen der kinematischen Struktur außerhalb von Teleskopaperturen denkbar sind.

Die Durchstrahlungsfähigkeit der spinnenartigen Lagerungsanordnung beruht zwecks Vermeidung oder Reduktion der Streustrahlung auf besonders dünnen bandartigen Streben, deren Orientierung mit jeder Tragstruktur unabhängig vom Justagezustand der Teleskopspinne einzeln steuerbar ist. Dadurch wird eine Minimierung der Projektionsflächen als direkter Abgleich gegenüber dem erreichten Justagezustand der Halterungseinrichtung 15 für den Sekundärspiegel 16 (als nötige Randbedingung hierfür) möglich.

Das beschriebene Steuerungsverfahren zur Ausrichtung der bandartigen Streben eignet sich auch für Teleskope mit integrierter optronischer Strahlablenkung hoher Bandbreite wie zuvor beschrieben, wobei die hierfür erforderlichen Randbedingungen direkt aus der Kommandierung des optronischen Stellsystems und der resultierenden Auslenkung der Lichtbündel abgeleitet, transformiert und phasensynchron der Kommandierung der Stellantriebe der Wiegen überlagert werden können (entsprechend der gewählten Zielgrößen zur Streulichtminimierung).

Die Steuerung der Streulichtminimierung erfolgt durch dieselben Stellantriebe wie zur Justage der Sekundärspiegelaufhängung (Halterungseinrichtung 15), wobei die hierfür realisierten Stellbewegungen je Tragstruktur gezielt die "identischen Freiheiten" der Kinematik nutzen. Hierdurch wird eine Unabhängigkeit zwischen dem Justagezustand der Halterungseinrichtung 15 und dem Orientierungszustand der Streben erreicht.

Aufgrund der radialsymmetrischen Vorspannung aller Streben bei zugleich vorteilhafter Anpassbarkeit ihrer thermischen Ausdehnungskoeffizienten entsteht im Zusammenhang mit der geometrischen Ähnlichkeit der Tragstrukturen in radialsymmetrischer und axialsymmetrischer Anordnung ein mechanisch und thermisch robustes Design mit hoher Langzeitstabilität. Durch den großen realisierbaren Bereich möglicher Vorspannungen wird die Lagerungsanordnung auch dynamisch bezüglich an der Halterungseinrichtung 15 für den Sekundärspiegel 16 aufzunehmenden Komponenten adaptierbar.

Ein sehr günstiges Masse-Steifigkeitsverhältnis wird durch kinematisch verwölbungsfrei gleichmäßig vorgespannte bandförmige Streben hochkant zur Richtbewegung durch einen kinematisch exakt ausführbaren Zwanglauf aufgrund einer Kompensation der Gangpolverschiebungen realisiert. Die hierdurch erreichbare dynamische Steifigkeit und die resultierenden hohen Eigenfrequenzen der gesamten Sekundärspiegelaufnahme einschließlich der erfindungsgemäßen Lagerungsanordnung ermöglichen extrem hohe Richtbeschleunigungen des Teleskops bei gleichzeitiger Einhaltung hoher optischer Qualität. Durch diese dynamische Robustheit werden ebenso hohe Bandbreiten der Stellantriebe zur Justage wie auch für die an der Halterungseinrichtung 15 für den Sekundärspiegel 16 fixierten Stellsysteme ermöglicht.

Die als Teleskopspinne gestaltete Lagerungsanordnung kann theoretisch eine beliebige Anzahl von Tragstrukturen (mindestens jedoch zwei) aufweisen, wobei sie mit größer steigender Anzahl zunehmend isotrope Steifigkeitseigenschaften erhält. Hieraus entsteht über die Realisierbarkeit höchster Richtbeschleunigungen hinaus auch die Möglichkeit beliebiger Teleskopschwenkwinkel zur kompletten sphärischen Abdeckung (Überschlagfähigkeit im Schwerefeld der Erde) bei gleichzeitiger Einhaltung hoher optischer Qualität.

Sowohl die Justage der Lagerungsanordnung als auch die Streulichtminimierung können entweder, beispielsweise mittels einer Regelungseinrichtung, kontinuierlich geregelt und/oder, beispielsweise mittels einer Steuerungseinrichtung, in Zeitabständen gesteuert kalibriert werden.

Sofern die Stellantriebe abtriebsseitig selbsthemmende Eigenschaften aufweisen, können Feststellbremsen ggf. entfallen (sicherer Zustand nach Außerbetriebsetzung für Transport, ebenso wie in Havariefällen).

Sofern an der Halterungseinrichtung 15 für den Sekundärspiegel 16 eine Sensorik zur Justage des Teleskopaufbaues integriert ist, kann mit dieser Lagerungsanordnung jederzeit eine Auto-Kalibration durchgeführt werden.

Der jeweils erreichte Spannungszustand der einzelnen Streben kann jederzeit durch Klangspektrumsanalyse kontrolliert und überwacht werden. Die nötige Anregung hierfür könnte durch einen Impuls des jeder Strebe zugeordneten Stellantriebes erfolgen.

Die an den Wiegen vorgesehenen Stellantriebe für die Aktorelemente sind vorteilhaft nahe am Gestellring 17 angeordnet, an dem die Tragstrukturen angebracht sind, so dass deren elektrische Anbindung außerhalb der ringförmigen optischen Apertur 18 möglich ist.

Die einzelnen Streben sind vorteilhaft elektrisch leitfähig ausgeführt, womit einerseits ein elektrischer Potenzialausgleich zur Halterungseinrichtung 15 für den Sekundärspiegel 16 erfolgen kann und andererseits bezüglich dieses Potenzials über die übrigen Streben auch eine Energiezufuhr zu in der Halterungseinrichtung 15 für den Sekundärspiegel 16 installierten Stellsystemen für den Sekundärspiegel realisierbar ist.

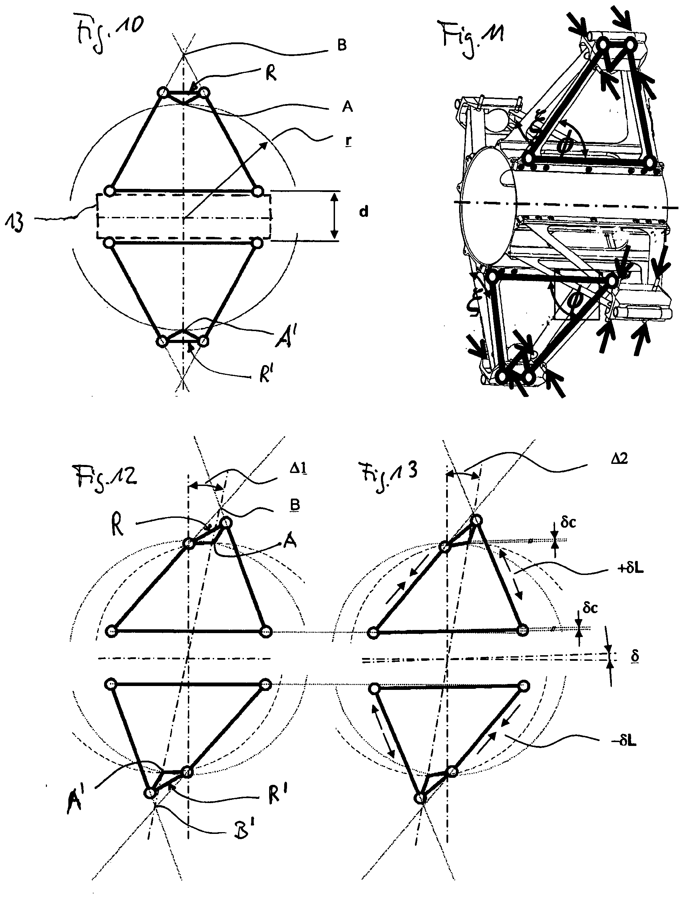

Die geometrischen Zusammenhänge in der erfindungsgemäßen justierbaren Lageranordnung werden nachstehend unter Bezugnahme auf die Figuren 10 bis 14 erläutert.

Die Justageaufgabe besteht darin, dass das zylindrische Halterungselement 13 gegenüber dem Gestellring 17 in allen sechs Freiheiten fein positionierbar sein soll.

Fig. 10 zeigt ein vereinfachtes mechanisches Schema zweier einander gegenüber liegender Tragstrukturen, die jeweils mit ihren beiden Viergelenkträgern ein räumliches Viergelenkgetriebe bilden, in einer unbelasteten Neutralstellung.

Ausgehend von dem bei Viergelenkträgern bekannten Prinzip des Robertslenkers zur Realisierung genäherter Geradführungen werden dessen kinematischen Abmessungen zur Bildung einer für die Realisierung der Erfindung vorgesehenen kinematischen Kette zunächst so modifiziert, dass der Punkt A, A' des jeweiligen Koppeldreieckes R, R' eine genäherte Kreisbahn beschreibt, deren Radius r gleich dem Abstand der Auflagepunkte A, A' ist, die der Mitte des jeweiligen Kugelgelenks 27 entsprechen, mit denen die jeweilige Tragstruktur 20 am Gestellringe 17 gelagert ist.

Mindestens zwei derartige, kinematischen Ketten darstellende Anordnungen, die gemäß weiterer Beschreibung noch zu modifizieren sind, sind paarweise sternförmig um das zylindrische Halterungselement 13 angeordnet. Jede dieser paarweisen Anordnungen bildet, wie oben bereits beschrieben, in Verbindung mit weiteren Komponenten jeweils den wesentlichen Teil einer Tragstruktur 20.

Vorteilhaft wird der in Fig. 11 dargestellte Winkel ξ der paarweisen Anordnung (jener Winkel unter dem die beiden Viergelenkträger einer Tragstruktur zueinander geneigt sind) so gewählt, dass eine rotationssteife Verbindung zwischen dem zylindrischen Halterungselement 13 und dem Gestellring 17 entsteht. Als kinematische Abmessungen werden in diesem Falle die jeweiligen seitlichen Projektionen dieser Anordnung wirksam.

Die kinematische Synthese der Tragstrukturen erfordert, dass der Abstand d der Anbindungen am Halterungselement 13 entsprechend dem Schwenkradius r so zu wählen ist, dass in Verbindung mit dem Strebenwinkel Φ (Neigung der Streben zur Verbindungsgeraden der zugehörigen objektseitigen Gelenke) alle nachfolgend genannten kinematischen Zwangsbedingungen gleichzeitig eingehalten werden können.

Fig. 12 zeigt eine ausgelenkte Stellung der dargestellten ebenen Kinematik mit unveränderlichen Strebenlängen. Die Schnittpunkte B, B' der Verlängerung der Streben der Viergelenke zeigen die Lage der Momentanpole um die sich die Koppeldreiecke R, R' momentan drehen. Im kinematisch dargestellten Fall, in dem der Gestellring 17 gegenüber dem Halterungselement 13 relativ positioniert werden soll, wandert dieser Momentanpol (Schnittpunkt B, B') mit zunehmendem Verstellwinkel auf der sogenannten Rastpolbahn. Im umgekehrten Falle, in dem der Gestellring 17 des Teleskopes das Gestellelement ist und das Halterungselement 13 relativ zu positionieren ist, wandern die Momentanpole auf der sogenannten Gangpolbahn, wobei sich diese durch die Mitbewegungen der Koordinatensysteme der Diagramme von den Rastpolbahnen unterscheidet.

Die hier beschriebene Einrichtung stellt den Sonderfall dar, bei dem, wie in Fig. 12 dargestellt ist, in jeder Stellung zweier gegenüberliegender Kinematiken die Auflagepunkte A, A' und die Momentanpole B, B' stets auf einer Geraden liegen, das heißt bei räumlicher Anordnung mehrerer Tragstrukturen stets auf einer Ebene liegen. Ist diese Bedingung kinematisch erfüllt, gilt diese in Analogie auch für gleichartige Anordnungen mit längenveränderlichen Streben, wie es durch die Doppelpfeile neben den Streben in Fig. 13 symbolisch dargestellt ist. Unter dieser Voraussetzung werden das Maximum der erreichbaren Stellwege der Justageeinrichtung bezüglich ihrer kinematischen Abmessungen erreichbar.

Eine Längenänderung der Streben muss zur rotatorischen Verstellung des Halterungselements 13 gegenüber dem Gestellring 17 differenziell erfolgen, das heißt die Verlängerung einer Strebe um den Wert +*δ_{L}* muss gleich der Verkürzung der entsprechenden (spiegelbildlichen) Strebe der gegenüberliegenden Tragstruktur um den Wert -*δ_{L}* sein, wobei die gegenüberliegenden Tragstrukturen spiegelbildlich zu verstellen sind. Abweichungen davon führen entsprechend der jeweiligen Ebene zwangsläufig zu zwei translatorischen Positionierfreiheiten zwischen dem Halterungselement 13 und dem Gestellring 17.

Die übrigen Einstellmöglichkeiten realisieren eine koaxiale Verschiebung und eine Rollbewegung, wie es in der Beschreibung zur Anordnung der Stellantriebe erläutert ist.

Wie aus Fig. 13 ebenfalls hervorgeht, wandern bei einer Längenänderung der Streben die Kreisbahnen beider gegenüberliegender Kinematiken entgegengesetzt auseinander, was zu einer Vergrößerung des Abstandes der gegenüberliegenden Auflagepunkte A, A' um 2 × *δc* gleich käme.

Bei der hier beschriebenen Auslegung der kinematischen Abmessungen würde sich der Abstand d der durch die Längenänderung der Streben hervorgerufenen Kippung der inneren Linien (Verbindungsgeraden der objektseitigen Gelenke) um δ vergrößern. Da aber sowohl der äußere Gestellring 17 mit seinen Lagereinrichtungen 19 als auch das Halterungselement 13 jeweils starre Körper in Form der beiden zueinander zu positionierenden Objekte darstellen, werden diese Abstände exakt ausgeglichen, so dass im Umkehrschluss die Unveränderlichkeit der Gestellabmessungen zwischen dem Halterungselement 13 und dem Gestellring 17 auch kinematisch gegeben ist.

Somit ist eine Kippbewegung zwischen dem Halterungselement 13 und dem Gestellring 17 nur dann möglich, solange die Beträge *δc* gemäß Fig. 13 identisch sind. Mit anderen Worten wird auf diese Weise sicher gestellt, dass jede Tragstruktur unabhängig von ihrem aktuellen Auslenkungszustand das rotatorisch zu verstellende Element stets um denselben Drehpol bewegt, sodass es auch bei Überlagerung beliebig vieler Justagebewegungen (rotatorisch und translatorisch) nie zu Klemmstellungen der hier beschriebenen Positioniereinrichtung kommen kann.

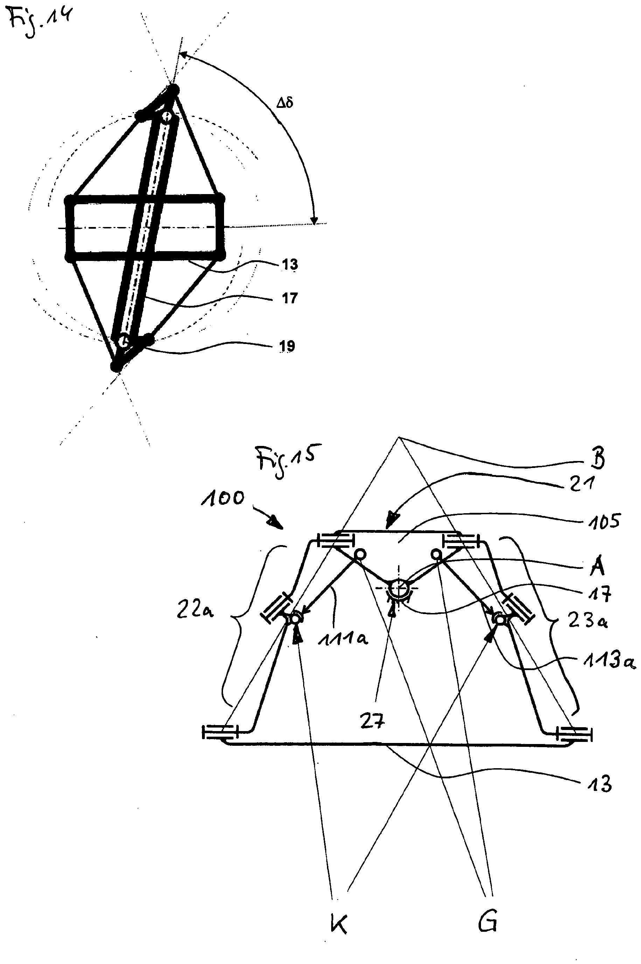

Wie in Fig. 14 gezeigt ist, ergeben sich die erreichbaren Bogenmaße entsprechend den kinematisch erreichbaren Kippwinkeln Δδ = Δ2 + δ zwischen beiden relativ zueinander zu positionierenden Objekten, dem Halterungselement 13 und dem Gestellring 17, je nach maßstäblichen Baugröße, die bei gleicher Größenordnung auch den möglichen translatorischen Bewegungen entsprechen.

Der bis hier beschriebene auslegungstechnische Sonderfall gestattet die erläuterten Bewegungsfreiheiten auch dann, wenn die Drehgelenke des Viergelenkes in der dargestellten ebenen Kinematik blockiert werden. Kinematisch entspricht dies einer Subtraktion Δ = Δ1 - Δ2 + δ (Fig. 12 und 13). Diese kinematische Bedingung realisiert die bezüglich hoher Steifigkeit und Durchstrahlungsfähigkeit besonders vorteilhafte Möglichkeit einer Hochkantanordnung der Strebenbänder, wie in Fig. 11 sowie in Fig. 2 bis Fig. 5 dargestellt ist.

Erfolgt die Blockierung der Drehgelenke der zuvor beschriebenen ebenen Kinematik durch eine rechtwinklige Anordnung der Achsen dieser Drehgelenke bezüglich der Strebenlängsachse, entsteht hieraus zugleich eine besonders vorteilhafte Realisierungsmöglichkeit zur Längenänderung der Streben. Bei Verwendung von Strebenbändern fällt diese Beweglichkeit senkrecht zur kinematischen Ebene in vorteilhafter Weise mit der Biegeweichheit jeder Strebe quer zur ihrer Längserstreckung zusammen, womit sich einerseits die nunmehr entstehenden Festkörpergelenke (Krümmungsmittelpunkte der Strebenbiegung) an den in Längsrichtung gespannten Streben nahe ihrer Einspannung selbständig ausbilden. Entsprechend lassen sich auch die Stellantriebe 11 seitlich der Streben so anordnen, dass sie ihre Stellkraft quer zur Strebenlängsstreckung als die Streben auslenkende Kraft beaufschlagen können. Durch diese Art der Strebenauslenkung bleibt die Kipp- und Axialsteifigkeit der beschriebenen Einrichtung durch nahezu kinematische Unabhängigkeit (aufgrund der hohen Biegesteifigkeit Hochkant der Strebe) der angebundenen Stellantriebe nahezu unbeeinträchtigt, unabhängig vom jeweiligen Justagezustand. Weiterhin ist dadurch die Verstellbarkeit der Streben aus ihren in Längsrichtung vorgespannten Strecklagen heraus eine extreme Stellübersetzung zwischen den Stellantrieben 11 und der abtriebsseitiger Plattform (Halterungselement 13 oder Gestellring 17) auf kleinstem Bauraum möglich, was einerseits antriebsseitig höchste Präzision einer spielfreien und hysteresefreien Verstellung ermöglicht und andererseits die abtriebsseitige Robustheit gegenüber abtriebsseitigen Störgrößen realisiert, da kaum Rückwirkung auf die Stellantriebe erfolgt.

Im Falle einer Vierfachanordnung der Tragstrukturen 20, wie sie in Fig. 3, Fig. 5 und Fig. 11 gezeigt ist, können die Bewegungen der zugehörigen Stellantriebe 11 bei kleinen Stellwinkeln nahezu linear unabhängig den abtriebsseitigen Kardanwinkeln zugeordnet werden. Hierdurch wird die manuelle Justierbarkeit deutlich vereinfacht, wie fortfolgend beschrieben wird.

Ein weiteres Merkmal dieser Erfindung ist die gezielte Nutzbarkeit sogenannter "identischer Freiheiten" der kinematischen Gesamtanordnung. Darunter werden alle Bewegungsfreiheiten verstanden, die keinerlei Einfluss auf die Stellung zwischen Antriebs- und Abtriebsplattform haben, wie beispielsweise die Rotationsmöglichkeiten der sechs längenveränderlichen Streben um ihre Längsachsen gemäß Fig. 8. Im Gegensatz zu reinen Parallelstrukturen (Hexapoden mit sechs linear unabhängigen Stellantrieben), deren Bewegung ein zeit- und wegsynchronisiert geregeltes Betätigen aller Stellantriebe gleichzeitig erfordert, wird hier eine "hybride Parallelkinematik" mit mehr als sechs linear abhängigen Stellantrieben realisiert. Die gemäß dem in Fig. 9 gezeigten Strukturschema ebenfalls verbleibenden sechs identischen Freiheiten können hier jedoch durch Linearkombinationen der redundanten Anzahl von Stellantrieben gezielt gesteuert bzw. geregelt werden. Die hiermit entstandene Zuordnungsmöglichkeit je eines Stellelementes pro Strebe gestattet somit auch eine Torsionsbewegung jeder einzelnen Tragstruktur 20 durch jeweils vier entgegengesetzt betätigte Stellantriebe.

Diese Torsionsbewegung realisiert die kollektive Ausrichtung aller Strebenbänder je Tragstruktur, die nutzbar ist für:
- die Minimierung von Abschattung und Streulicht durch eine Einstellung der Strebenbänder parallel zur Ein- bzw. Ausstrahlrichtung des Teleskops für den Fall, dass die Tragstrukturen durchstrahlt werden müssen,
- die Möglichkeit einer manuellen bzw. ferngesteuerten Justageschrittfolge, ohne dass diese zeit- und wegsynchron erfolgen muss. Der erforderliche kinematische Ausgleich hierfür erfolgt über eine elastische Tordierbarkeit der Strebenbänder, die hiermit keine Rückwirkung auf den Justagezustand hat, was wiederum nach Beendigung aller Justageschritte jederzeit eine Rückstellung in den Zustand minimaler Strebenvorspannung gestattet bzw. eine andere gewünschte Stellung (wie zur Streulichtminimierung) ermöglicht.

Fig. 15 zeigt beispielhaft ein kinematisches Schema der räumlichen Kinematik des Viergelenkträgers 100, der zusammen mit dem Viergelenkträger 100' die Tragstruktur 20a bildet. Analoge Ausführungen gelten auch für alle anderen Viergelenkträger. Die Angriffspunkte der Stellantriebe 111a und 113a an der zugeordneten Strebe 22a bzw. 23a können im Modell als Kugelgelenke K mit drei Freiheitsgraden angesehen werden, ebenso wie das Kugelgelenk 27. Die Anbindung der Stellantriebe 111a und 113a an der Wiege 21 (oder alternativ am Gestellring 17) können Kugelgelenke mit drei Freiheitsgraden oder auch Drehgelenke mit einem Freiheitsgrad sein. Die übrigen Gelenke im Viergelenkträger 100 sind Drehgelenke mit einem Freiheitsgrad.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Justierbare Lagerungsanordnung für ein relativ zu einer Basis (10) präzise zu positionierendes Objekt (13, 15, 16), insbesondere für einen Sekundärspiegel eines optischen Spiegelteleskops;
- wobei die Lagerungsanordnung zumindest zwei mit der Basis (10) und dem Objekt (13, 15, 16) verbundene Tragstrukturen (20; 20a, 20b, 20c, 20d; 20A, 20B, 20C, 20D, 20E, 20F) aufweist;
- wobei die jeweilige Tragstruktur (20; 20a, 20b, 20c, 20d; 20A, 20B, 20C, 20D, 20E, 20F) zwei gleichartige Viergelenkträger (100; 100') umfasst, die nichtparallel zueinander angeordnet sind und die gemeinsam mit einer zwei Verbindungslenker (105, 105') aufweisenden Wiege (21) die jeweilige Tragstruktur (20; 20a, 20b, 20c, 20d; 20A, 20B, 20C, 20D, 20E, 20F) bilden,
- wobei jeder Viergelenkträger (100, 100') zwei nichtparallel zueinander verlaufende Streben (22, 23; 24, 25) aufweist, die jeweils mit einem ersten Ende in einem objektseitigen Gelenk (106, 108; 107, 109) am Objekt (13, 15, 16) gelenkig gelagert sind;
- wobei die erste Strebe (22; 25) und die zweite Strebe (23; 24) an ihrem jeweiligen zweiten Ende mit einem äußeren Gelenk (101, 103; 102, 104) versehen sind, wobei die äußeren Gelenke (101, 103; 102, 104) beider Viergelenkträger (100, 100') über einen zugeordneten Verbindungslenker (105, 105') miteinander verbunden sind;
- wobei der Abstand zwischen den äußeren Gelenken (101, 103; 102, 104) eines jeden Viergelenkträgers (100, 100') geringer ist als der Abstand zwischen den objektseitigen Gelenken (106, 108; 107, 109);
- wobei eine erste und eine zweite Gelenkachse (101', 103'; 102', 104') eines jeden Viergelenkträgers (100, 100') in einem Winkel zu der vom Viergelenkträger (100, 100') bestimmten Ebene liegen;
- wobei eine dritte und eine vierte Gelenkachse (106', 108'; 107', 109') eines jeden Viergelenkträgers (100, 100') in der vom Viergelenkträger (100, 100') bestimmten Ebene liegen;
- wobei die jeweilige Tragstruktur (20; 20a, 20b, 20c, 20d; 20A, 20B, 20C, 20D, 20E, 20F) eine die beiden miteinander gekoppelten Viergelenkträger (100, 100') aufweisende räumliche Mehrgelenkstruktur bildet;
- wobei der Verbindungslenker (105) auf seiner bezüglich der Verbindungsgeraden zwischen den außenseitigen Gelenken (101, 103; 102, 104) zur Innenseite der Viergelenkanordnung (100) versetzten Seite mit einer Lagerfläche (27') eines Stützlagers (27) versehen ist;
- wobei die jeweilige Tragstruktur (20; 20a, 20b, 20c, 20d; 20A, 20B, 20C, 20D, 20E, 20F) mittels des Stützlagers (27) relativ zur Basis (10) gelenkig gelagert ist,
und wobei an der jeweiligen Wiege (21) vier Streben (22, 23, 24, 25) angebracht sind, die nicht parallel zueinander radial nach innen zu einer am Objekt (13) angebrachten Verankerungsstruktur (26) verlaufen, wobei die Verankerungsstruktur (26) zwei in Umfangsrichtung des Objekts (13) voneinander beabstandete und parallel zur Längsachse (X') des Objekts (13) verlaufende Strukturbalken (26', 26") aufweist, wobei eine erste Strebe (22) und eine zweite Strebe (23) am ersten Strukturbalken (26') in Richtung der Achse (X") voneinander beabstandet mit dem ersten Strukturbalken (26') verbunden sind, wobei eine dritte Strebe (24) und eine vierte Strebe (25) in Richtung der Längsachse (X') des zylindrischen Halterungselements (13) voneinander beabstandet mit dem zweiten Strukturbalken (26") verbunden sind, und
wobei die Streben (22, 23, 24, 25) an der Verankerungsstruktur (26) geklemmt gehaltert sind, wozu die Strukturbalken (26', 26") Klemmeinrichtungen aufweisen, und wobei die Streben (22, 23, 24, 25) biegeweich ausgebildet sind.

2. Justierbare Lagerungsanordnung nach Anspruch 1,
**dadurch gekennzeichnet,**
**dass** die in der vom Viergelenkträger (100, 100') bestimmten Ebene liegende dritte und vierte Gelenkachse (106', 108'; 107', 109') eines jeden Viergelenkträgers (100, 100') die Gelenkachsen der objektseitigen Gelenke (106, 108; 107, 109) sind.

3. Justierbare Lagerungsanordnung nach einem der vorhergehenden Ansprüche,
**dadurch gekennzeichnet,**
**dass** die Streben (22, 23, 24, 25) jeweils eine bandartige Gestalt aufweisen, deren flächige Erstreckung in der oder parallel zu der vom Viergelenkträger (100, 100') bestimmten Ebene liegt.

4. Justierbare Lagerungsanordnung nach Anspruch 2 oder 3,
**dadurch gekennzeichnet, dass** die Gelenke (106, 108; 107, 109), deren Gelenkachsen (106', 108'; 107', 109') in der vom Viergelenkträger (100, 100') bestimmten Ebene liegen, Festkörpergelenke sind.

5. Justierbare Lagerungsanordnung nach einem der vorhergehenden Ansprüche,
**dadurch gekennzeichnet,**
**dass** jeder Strebe (22, 23, 24, 25) ein antreibbares Aktorelement (22', 23', 24', 25') derart zugeordnet ist, dass das Aktorelement (22', 23', 24', 25') die Strebe (22, 23, 24, 25) mit einer die Strebe (22, 23, 24, 25) quer zu ihrer Längserstreckung auslenkenden Kraft beaufschlagt.

6. Justierbare Lagerungsanordnung nach Anspruch 5,
**dadurch gekennzeichnet,**
**dass** das Aktorelement (22', 23', 24', 25') von einem Stellantrieb (22", 23", 24", 25") antreibbar ist, insbesondere ein angetriebenes Element des Stellantriebs (22", 23", 24", 25") ist.

7. Justierbare Lagerungsanordnung nach einem der vorhergehenden Ansprüche,
**dadurch gekennzeichnet,**
**dass** die Lagerungsanordnung zumindest zwei, vorzugsweise zumindest drei, weiter vorzugsweise zumindest vier, mit der Basis (10) und dem Objekt (15, 16) verbundene Tragstrukturen (20a, 20b, 20c, 20d) aufweist.

8. Justierbare Lagerungsanordnung nach einem der Ansprüche 5 bis 7,
**dadurch gekennzeichnet,**
- **dass** die Streben (22, 23, 24, 25) jeweils einen ersten, basisnahen Endbereich und einen zweiten, objektnahen Endbereich aufweisen und
- **dass** das zugeordnete Aktorelement (22', 23', 24', 25') so angeordnet ist, dass es die Strebe (22, 23, 24, 25) unter Antriebseinfluss mit der auf die Strebe (22, 23, 24, 25) zwischen ihren beiden Gelenken (101, 106; 103, 108; 102, 107; 104, 109) ausgeübten Kraft beaufschlagt.

9. Justierbare Lagerungsanordnung nach einem der Ansprüche 5 bis 8, **dadurch gekennzeichnet,**
**dass** das jeder Strebe (22, 23, 24, 25) zugeordnete Aktorelement (22', 23', 24', 25') oder ein weiteres antreibbares Aktorelement der Strebe (22, 23, 24, 25) derart zugeordnet ist, dass dieses Aktorelement (22', 23', 24', 25') unter Antriebseinfluss die Strebe (22, 23, 24, 25) mit einer ein Biegemoment auf die Strebe (22, 23, 24, 25) ausübenden Kraft beaufschlagt.

10. Justierbare Lagerungsanordnung nach einem der Ansprüche 5 bis 9,
**dadurch gekennzeichnet,**
**dass** die Stellantriebe (22", 23", 24", 25") aller Aktorelemente (22', 23', 24', 25') mit einer gemeinsamen Steuerungs- oder Regelungseinrichtung zur Übertragung von Stellsignalen verbunden sind.

11. Justierbare Lagerungsanordnung nach einem der Ansprüche 5 bis 10,
**dadurch gekennzeichnet,**
- **dass** die Lagerungsanordnung mit mehr als zwei Tragstrukturen (20; 20a, 20b, 20c, 20d; 20A, 20B, 20C, 20D, 20E, 20F) versehen ist, die eine Aufhängung eines zu einem Hauptspiegel (12) korrespondierenden Sekundärspiegels (16) bilden,
- wobei die mit den Tragstrukturen (20; 20a, 20b, 20c, 20d; 20A, 20B, 20C, 20D, 20E, 20F) verbundene Basis (10) von einer Spiegelteleskopstruktur gebildet ist,
- wobei das Objekt von einer Halterungseinrichtung (15) des Sekundärspiegels (16) gebildet ist und
- wobei der Sekundärspiegel (16) mittels der Aktorelemente (22', 23', 24', 25') relativ zum Hauptspiegel (12) einjustierbar ist.

12. Justierbare Lagerungsanordnung nach Anspruch 11,
**dadurch gekennzeichnet,**
**dass** die bandartig ausgebildeten Streben (22, 23, 24, 25) der Tragstrukturen (20; 20a, 20b, 20c, 20d; 20A, 20B, 20C, 20D, 20E, 20F) so angeordnet sind, dass ihre flächigen Seiten in einer im Wesentlichen parallel zur Spiegelteleskopachse (X) ausgerichteten Ebene verlaufen.

13. Justierbare Lageranordnung nach einem der vorhergehenden Ansprüche,
**dadurch gekennzeichnet,**
**dass** die justierbare Lageranordnung zumindest drei Tragstrukturen aufweist und
**dass** das Stützlager (27) ein Kugelgelenklager oder ein Spitzenlager mit dem Freiheitsgrad 3 ist.

14. Justierbare Lageranordnung nach einem der vorhergehenden Ansprüche,
**dadurch gekennzeichnet,**
**dass** alle kinematischen Abmessungen so gewählt sind, dass auch in beliebig ausgelenktem Zustand der justierbaren Lageranordnung alle Stützlager (27) und alle Momentanpole (B) stets auf einer Ebene liegen, wodurch Verstellbewegungen dieser Lageranordnung kinematisch möglich werden und in beliebiger Reihenfolge nacheinander ausführbar sind.

## Claims

1. Adjustable mounting arrangement for an object (13, 15, 16) which is to be positioned precisely relative to a base (10), in particular for a secondary reflector of an optical reflector telescope;
- wherein the mounting arrangement has at least two support structures (20; 20a, 20b, 20c, 20d; 20A, 20B, 20C, 20D, 20E, 20F) connected to the base (10) and to the object (13, 15, 16);
- wherein each support structure (20; 20a, 20b, 20c, 20d; 20A, 20B, 20C, 20D, 20E, 20F) comprises two identical four-joint supports (100; 100'), which are arranged mutually non-parallel and which, together with a cradle (21) having two connecting bars (105, 105'), form the support structure (20; 20a, 20b, 20c, 20d; 20A, 20B, 20C, 20D, 20E, 20F) in question;
- wherein each four-joint support (100, 100') has two struts (22, 23; 24, 25) which extend mutually non-parallel and which are each mounted by a first end in an articulated manner in an object-side joint (106, 108; 107, 109) on the object (13, 15, 16);
- wherein the first strut (22; 25) and the second strut (23; 24) are each provided with an outer joint (101, 103; 102, 104) at the second end thereof, the outer joints (101, 103; 102, 104) of the two four-joint supports (100, 100') being interconnected via an assigned connecting bar (105, 105');
- wherein the distance between the outer joints (101, 103; 102, 104) of each four-joint support (100, 100') is less than the distance between the object-side joints (106, 108; 107, 109);
- wherein a first and a second joint axis (101', 103'; 102', 104') of each four-joint support (100, 100') are at an angle to the plane defined by the four-joint support (100, 100');
- wherein a third and a fourth joint axis (106', 108'; 107', 109') of each four-joint support (100, 100') lie in the plane defined by the four-joint support (100, 100');
- wherein each support structure (20; 20a, 20b, 20c, 20d; 20A, 20B, 20C, 20D, 20E, 20F) forms a three-dimensional multi-joint structure including the two four-joint supports (100, 100') coupled to one another;
- wherein the connecting bar (105) is provided, on the face thereof offset from the inner face of the four-joint support arrangement (100) with respect to the straight lines connecting the outer joints (101, 103; 102, 104), with a bearing face (27') of a support bearing (27);
- wherein each support structure (20; 20a, 20b, 20c, 20d; 20A, 20B, 20C, 20D, 20E, 20F) is mounted in an articulated manner relative to the base (10) by means of the support bearing (27);
and wherein four struts (22, 23, 24, 25) are attached to each cradle (21) and extend radially inwards, mutually non-parallel, with respect to an anchoring structure (26) attached to the object (13),
the anchoring structure (26) having two structural beams (26', 26") mutually spaced apart in the peripheral direction of the object (13) and extending parallel to the longitudinal axis (X') of the object (13),
a first strut (22) and a second strut (23) being connected to the first structural beam (26'), mutually spaced apart in the direction of the axis (X") on the first structural beam (26'),
a third strut (24) and a fourth strut (25) being connected to the second structural beam (26"), mutually spaced apart in the direction of the longitudinal axis (X') of the cylindrical holding element (13), and
the struts (22, 23, 24, 25) being held clamped to the anchoring structure (26), the structural beams (26', 26") having clamping means for this purpose and the struts (22, 23, 24, 25) being formed flexible.

2. Adjustable mounting arrangement according to claim 1,
**characterised**
**in that** the third and fourth joint axes (106', 108'; 107', 109') of each four-joint carrier (100, 100'), which lie in the plane defined by the four-joint support (100, 100'), are the joint axes of the object-side joints (106, 108; 107, 109).

3. Adjustable mounting arrangement according to either of the preceding claims,
**characterised**
**in that** the struts (22, 23, 24, 25) each have a strip-like shape, the planar extension of which is in or parallel to the plane defined by the four-joint support (100, 100').

4. Adjustable mounting arrangement according either claim 2 or claim 3,
**characterised**
**in that** the joints (106, 108; 107, 109) whose joint axes (106', 108; 107', 109') lie in the plane defined by the four-joint support (100, 100') are flexure joints.

5. Adjustable mounting arrangement according to any of the preceding claims,
**characterised**
**in that** each strut (22, 23, 24, 25) is assigned a drivable actuator element (22', 23', 24', 25') in such a way that the actuator element (22', 23', 24', 25') applies to the strut (22, 23, 24, 25) a force deflecting the strut (22, 23, 24, 25) transverse to the longitudinal extent thereof.

6. Adjustable mounting arrangement according to claim 5,
**characterised**
**in that** the actuator element (22', 23', 24', 25') can be driven by an actuating drive (22", 23", 24", 25"), and in particular is a driven element of the actuating drive (22", 23", 24", 25").

7. Adjustable mounting arrangement according to any of the preceding claims,
characterised
the mounting arrangement has at least two, preferably at least three, more preferably at least four support structures (20a, 20b, 20c, 20d) connected to the base (10) and to the object (15, 16).

8. Adjustable mounting arrangement according to any of claims 5 to 7,
**characterised**
- **in that** the struts (22, 23, 24, 25) each have a first end region close to the base and a second end region close to the object, and
- **in that** the assigned actuator element (22', 23', 24', 25') is arranged so as to apply to the strut (22, 23, 24, 25), under the driving effect, the force exerted on the strut (22, 23, 24, 25) between the two joints (101, 106; 103, 108; 102, 107; 104, 109).

9. Adjustable mounting arrangement according to any of claims 5 to 8,
**characterised**
**in that** the actuator element (22', 23', 24', 25') assigned to each strut (22, 23, 24, 25) or a further drivable actuator element is assigned to the strut (22, 23, 24, 25) in such a way that said actuator element (22', 23', 24', 25') applies to the strut (22, 23, 24, 25), under a driving effect, a force exerting a torque on the strut (22, 23, 24, 25) .

10. Adjustable mounting arrangement according to any of claims 5 to 9,
**characterised**
**in that** the actuating drives (22", 23", 24", 25") of all of the actuator elements (22', 23', 24', 25') are connected to a shared control or regulation device for transmitting actuating signals.

11. Adjustable mounting arrangement according to any of claims 5 to 10,
**characterised**
- **in that** the mounting arrangement is provided with more than two support structures (20; 20a, 20b, 20c, 20d; 20A, 20B, 20C, 20D, 20E, 20F), which form a suspension of a secondary reflector (16) corresponding to a main reflector (12),
- the base (10) connected to the support structures (20; 20a, 20b, 20c, 20d; 20A, 20B, 20C, 20D, 20E, 20F) being formed by a reflector telescope structure,
- the object being formed by a holding device (15) of the secondary reflector (16), and
- the secondary reflector (16) being adjustable relative to the main reflector (12) by means of the actuator element (22', 23', 24', 25').

12. Adjustable mounting arrangement according to claim 11,
**characterised**
**in that** the struts (22, 23, 24, 25), formed strip-like, of the support structures (20; 20a, 20b, 20c, 20d; 20A, 20B, 20C, 20D, 20E, 20F) are arranged in such a way that the planar faces thereof extend in a plane orientated substantially parallel to the reflector telescope axis (X).

13. Adjustable mounting arrangement according to any of the preceding claims,
**characterised**
**in that** the adjustable mounting arrangement has at least three support structures, and
**in that** the support bearing (27) is a ball joint bearing or conical bearing having a degree of freedom of 3.

14. Adjustable mounting arrangement according to any of the preceding claims,
**characterised**
**in that** all kinematic dimensions are selected in such a way that, in any given deflected state of the adjustable mounting arrangement, all support bearings (27) and all instantaneous centres of rotation (B) always lie in a plane, meaning that adjustment movements of this mounting arrangement become kinematically possible and can be performed in succession in any desired order.

## Revendications

1. Agencement de support ajustable pour un objet (13, 15, 16) à positionner avec précision par rapport à une base (10), en particulier pour un miroir secondaire d'un télescope optique à miroir ;
- dans lequel l'agencement de support présente au moins deux structures porteuses (20 ; 20a, 20b, 20c, 20d ; 20A, 20B, 20C, 20D, 20E, 20F) reliées à la base (10) et à l'objet (13, 15, 16) ;
- dans lequel la structure porteuse respective (20 ; 20a, 20b, 20c, 20d ; 20A, 20B, 20C, 20D, 20E, 20F) comprend deux supports à articulation quadruple (100 ; 100') de la même nature qui sont disposés non parallèlement l'un à l'autre et qui forment, conjointement avec un berceau (21) présentant deux bras de liaison (105, 105'), la structure porteuse respective (20 ; 20a, 20b, 20c, 20d ; 20A, 20B, 20C, 20D, 20E, 20F),
- dans lequel chaque support à articulation quadruple (100, 100') présente deux entretoises (22, 23 ; 24, 25) qui s'étendent non parallèlement l'une à l'autre et qui sont montées chacune de manière articulée par une première extrémité dans une articulation côté objet (106, 108 ; 107, 109) sur l'objet (13, 15, 16) ;
- dans lequel la première entretoise (22 ; 25) et la deuxième entretoise (23 ; 24) sont pourvues d'une articulation extérieure (101, 103 ; 102, 104) à leur deuxième extrémité respective, les articulations extérieures (101, 103 ; 102, 104) des deux supports à articulation quadruple (100, 100') étant reliées entre elles par un bras de liaison associé (105, 105') ;
- dans lequel la distance entre les articulations extérieures (101, 103 ; 102, 104) de chaque support à articulation quadruple (100, 100') est inférieure à la distance entre les articulations côté objet (106, 108 ; 107, 109) ;
- dans lequel un premier et un deuxième axe d'articulation (101', 103' ; 102', 104') de chaque support à articulation quadruple (100, 100') font un angle avec le plan déterminé par le support à articulation quadruple (100, 100') ;
- dans lequel un troisième et un quatrième axe d'articulation (106', 108' ; 107', 109') de chaque support à articulation quadruple (100, 100') se situent dans le plan déterminé par le support à articulation quadruple (100, 100') ;
- dans lequel la structure porteuse respective (20 ; 20a, 20b, 20c, 20d ; 20A, 20B, 20C, 20D, 20E, 20F) forme une structure spatiale à articulations multiples présentant les deux supports à articulation quadruple (100, 100') couplés entre eux ;
- dans lequel le bras de liaison (105) est pourvu, sur son côté décalé par rapport à la droite de liaison entre les articulations extérieures (101, 103 ; 102, 104) vers le côté intérieur de l'agencement à articulation quadruple (100), d'une surface d'appui (27') d'un palier d'appui (27) ;
- dans lequel la structure porteuse respective (20 ; 20a, 20b, 20c, 20d ; 20A, 20B, 20C, 20D, 20E, 20F) est montée de manière articulée par rapport à la base (10) au moyen du palier d'appui (27),
et dans lequel quatre entretoises (22, 23, 24, 25) sont montées sur le berceau respectif (21), qui s'étendent non parallèlement les unes aux autres radialement vers l'intérieur vers une structure d'ancrage (26) montée sur l'objet (13),
dans lequel la structure d'ancrage (26) présente deux poutres structurelles (26', 26") espacées l'une de l'autre dans la direction circonférentielle de l'objet (13) et s'étendant parallèlement à l'axe longitudinal (X') de l'objet (13),
dans lequel une première entretoise (22) et une deuxième entretoise (23) sur la première poutre structurelle (26') sont reliées à la première poutre structurelle (26') en étant espacées l'une de l'autre dans la direction de l'axe (X"),
dans lequel une troisième entretoise (24) et une quatrième entretoise (25) sont reliées à la deuxième poutre structurelle (26") en étant espacées l'une de l'autre dans la direction de l'axe longitudinal (X') de l'élément de maintien cylindrique (13), et
dans lequel les entretoises (22, 23, 24, 25) sont maintenues par serrage sur la structure d'ancrage (26), les poutres structurelles (26', 26") présentant à cet effet des dispositifs de serrage, et les entretoises (22, 23, 24, 25) étant réalisées souples en flexion.

2. Agencement de support ajustable selon la revendication 1,
**caractérisé en ce**
**que** les troisième et quatrième axes d'articulation (106', 108'; 107', 109') de chaque support à articulation quadruple (100, 100') situés dans le plan déterminé par le support à articulation quadruple (100, 100') sont les axes d'articulation des articulations côté objet (106, 108 ; 107, 109).

3. Agencement de support ajustable selon l'une des revendications précédentes,
**caractérisé en ce**
**que** les entretoises (22, 23, 24, 25) présentent chacune une forme de bande dont l'extension plane se situe dans le plan déterminé par le support à articulation quadruple (100, 100') ou parallèlement à celui-ci.

4. Agencement de support ajustable selon la revendication 2 ou 3,
**caractérisé en ce**
**que** les articulations (106, 108 ; 107, 109) dont les axes d'articulation (106', 108' ; 107', 109') sont situés dans le plan déterminé par le support à articulation quadruple (100, 100') sont des articulations à corps solide.

5. Agencement de support ajustable selon l'une des revendications précédentes,
**caractérisé en ce**
**qu'**à chaque entretoise (22, 23, 24, 25) est associé un élément actionneur (22', 23', 24', 25') pouvant être entraîné de telle sorte que l'élément actionneur (22', 23', 24', 25') sollicite l'entretoise (22, 23, 24, 25) avec une force qui dévie l'entretoise (22, 23, 24, 25) transversalement à son extension longitudinale.

6. Agencement de support ajustable selon la revendication 5,
**caractérisé en ce**
**que** l'élément actionneur (22', 23', 24', 25') peut être entraîné par un servomoteur (22", 23", 24", 25"), en particulier est un élément entraîné du servomoteur (22", 23", 24", 25").

7. Agencement de support ajustable selon l'une des revendications précédentes,
**caractérisé en ce**
**que** l'agencement de support présente au moins deux, de préférence au moins trois, davantage de préférence au moins quatre structures porteuses (20a, 20b, 20c, 20d) reliées à la base (10) et à l'objet (15, 16).

8. Agencement de support ajustable selon l'une des revendications 5 à 7,
**caractérisé en ce**
- **que** les entretoises (22, 23, 24, 25) présentent chacune une première zone d'extrémité proche de la base et une deuxième zone d'extrémité proche de l'objet, et
- **que** l'élément actionneur (22', 23', 24', 25') associé est disposé de telle sorte qu'il sollicite l'entretoise (22, 23, 24, 25), sous l'influence de l'entraînement, avec la force exercée sur l'entretoise (22, 23, 24, 25) entre ses deux articulations (101, 106 ; 103, 108 ; 102, 107 ; 104, 109).

9. Agencement de support ajustable selon l'une des revendications 5 à 8,
**caractérisé en ce**
**que** l'élément actionneur (22', 23', 24', 25') associé à chaque entretoise (22, 23, 24, 25) ou un autre élément actionneur pouvant être entraîné est associé à l'entretoise (22, 23, 24, 25) de telle sorte que cet élément actionneur (22', 23', 24', 25'), sous l'influence de l'entraînement, sollicite l'entretoise (22, 23, 24, 25) avec une force exerçant un moment de flexion sur l'entretoise (22, 23, 24, 25) .

10. Agencement de support ajustable selon l'une des revendications 5 à 9,
**caractérisé en ce**
**que** les servomoteurs (22", 23", 24", 25") de tous les éléments actionneurs (22', 23', 24', 25') sont reliés à un dispositif de commande ou de régulation commun pour la transmission de signaux de réglage.

11. Agencement de support ajustable selon l'une des revendications 5 à 10,
**caractérisé en ce**
- **que** l'agencement de support est pourvu de plus de deux structures porteuses (20 ; 20a, 20b, 20c, 20d ; 20A, 20B, 20C, 20D, 20E, 20F) qui forment une suspension d'un miroir secondaire (16) correspondant à un miroir principal (12),
- la base (10) reliée aux structures porteuses (20 ; 20a, 20b, 20c, 20d ; 20A, 20B, 20C, 20D, 20E, 20F) étant formée par une structure de télescope à miroir,
- l'objet étant formé par un dispositif de maintien (15) du miroir secondaire (16), et
- le miroir secondaire (16) pouvant être ajusté par rapport au miroir principal (12) au moyen des éléments actionneurs (22', 23', 24', 25').

12. Agencement de support ajustable selon la revendication 11,
**caractérisé en ce**
**que** les entretoises (22, 23, 24, 25) réalisées en forme de bande des structures porteuses (20 ; 20a, 20b, 20c, 20d ; 20A, 20B, 20C, 20D, 20E, 20F) sont disposées de telle sorte que leurs côtés plats s'étendent dans un plan orienté sensiblement parallèlement à l'axe du télescope à miroir (X) .

13. Agencement de support ajustable selon l'une des revendications précédentes,
**caractérisé en ce**
**que** l'agencement de support ajustable présente au moins trois structures porteuses et
**que** le palier d'appui (27) est un palier à rotule ou un palier à pivot avec un degré de liberté 3.

14. Agencement de support ajustable selon l'une des revendications précédentes,
**caractérisé en ce**
**que** toutes les dimensions cinématiques sont choisies de telle sorte que, même dans un état dévié quelconque de l'agencement de support ajustable, tous les paliers d'appui (27) et tous les centres instantanés de rotation (B) se situent toujours dans un même plan, ce qui rend cinématiquement possibles des mouvements de réglage de cet agencement de support et permet de les exécuter successivement dans un ordre quelconque.
